(19) Europäisches Patentamt
European Patent Office
Office européen des brevets

(11) Publication number: **0 161 804**
**B1**

(12) **EUROPEAN PATENT SPECIFICATION**

(45) Date of publication of patent specification: **01.08.90**

(51) Int. Cl.$^5$: **C 08 F 293/00**

(21) Application number: **85302564.1**

(22) Date of filing: **12.04.85**

(54) **Method for modifying the surface of polymer materials.**

(30) Priority: **19.04.84 JP 79102/84**

(43) Date of publication of application:
**21.11.85 Bulletin 85/47**

(45) Publication of the grant of the patent:
**01.08.90 Bulletin 90/31**

(84) Designated Contracting States:
**DE FR GB IT NL**

(56) References cited:
**FR-A-2 472 584**
**GB-A- 904 262**

**PATENTS ABSTRACTS OF JAPAN, vol. 7, no. 22, 28 January 1983, pages 98C148; & JP - A - 57 179 246 (TAKEYA YAMASHITA) 04-11-1982**

(73) Proprietor: **NIPPON OIL AND FATS COMPANY, LIMITED**
**10-1, Yuraku-cho 1-chome**
**Chiyoda-ku Tokyo (JP)**

(72) Inventor: **Oshibe, Yoshihiro**
**2-34, Aza-Rokkanyama Taketoyo-Cho**
**Chita-gun Aichi Pref. (JP)**
Inventor: **Ohmura, Hiroshi**
**21-1, Aza-Kumano Taketoyo-Cho**
**Chita-gun Aichi Pref. (JP)**
Inventor: **Nakayama, Masaharu**
**72, Ohne-Cho Tenpaku-Ku**
**Nagoya City Aichi Pref. (JP)**
Inventor: **Yamamoto, Takashi**
**22-13, Ohoka 3-Chome Minami-Ku**
**Yokohama City Kanagawa Pref. (JP)**

(74) Representative: **Sheader, Brian N. et al**
**Eric Potter & Clarkson St. Mary's Court St. Mary's Gate**
**Nottingham NG1 1LE (GB)**

**EP 0 161 804 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method for modifying the surface of polymer materials by mixing a specifically limited block copolymer with the polymer material either prior to or during shaping of the polymer material. More particularly, the present invention relates to a method for modifying the surface of a polymer material, wherein a specifically limited block copolymer consisting of a polymer portion compatible with the polymer material and a polymer portion containing (per)fluoroalkylene groups or (per)(fluoroalkyl) groups (in the specification and claims, the terms "(per) fluoroalkylene" and "(per)fluoroalkyl" mean perfluoralkylene or fluoroalkylene, and perfluoroalkyl or fluoroalkyl respectively), is, prior to or during the shaping of the polymer material, mixed with the polymer material to give to the surface of the polymer material permanently durable corrosion resistance, solvent resistance, chemical resistance, antiblocking property, low frictional property, stain resistance, water repellency, oil repellency and weather resistance, which are inherent properties to the (per)fluoroalkylene group or (per)fluoroalkyl group.

GB—A—904 262 discloses a segmented copolymer comprising a fluorine-containing polymer segment and a polymer segment not containing fluorine which are synthesised using an ordinary free-radical initiator. The resulting block copolymer is used for coating apparel fabrics and other substrates.

FR—A—2 472 584 discloses a method for producing a nonaqueous dispersion of a polymer by the use of a polymeric peroxide. The dispersion is used in the formation of resin for paints, adhesives and inks and the patent has as its aim to improve the physical properties of the resin itself.

It has been known that fluorine-containing polymers have excellent properties, such as heat resistance, corrosion resistance, low friction, water repellency and oil repellency. These excellent properties are based on the reason that fluorine-containing polymers have a strong bonding force between fluorine atoms and carbon atoms due to the high electronegativity of fluorine atom, and further have a low intramolecular cohesive force and a very low surface tension due to the low polarization degree of fluorine atoms. A large number of polymer materials, which contain neither (per)fluoroalkylene groups nor (per)fluoroalkyl groups, have not such excellent properties, and these properties are inherent to fluorine-containing polymers themselves.

Recently, it has been variously attempted to give the above described excellent properties of fluorine-containing polymer to the surface of polymer material corresponding to the improvement of the level of properties demanded in the polymer material.

There are following 3 groups in the conventional methods for giving the excellent properties of fluorine-containing polymer to the surface of polymer material.

In the first group methods, the surface of a polymer material is coated with a compound containing (per)fluoroalkyl groups or (per)fluoroalkylene groups. For example, the processing of textiles by the use of fluorine resin has recently been prevailed. Japanese Patent Laid-Open Specification Nos. 9,619/80, 29,501/80, 45,756/80, 59,277/83 and 118,833/83 disclose methods for giving water repellency and oil repellency to textile surface, wherein the textile surface is coated with a random copolymer produced from a perfluoroalkyl group-containing acrylic or methacrylic acid ester used as an essential component and a vinyl monomer copolymerizable therewith. Further, Japanese Patent Application Publication No. 11,324/82 proposes a method for giving water repellency and oil repellency to the surface of polymer materials, such as textile, polyester film and the like, wherein the polymer material surface is coated with a fluorine-containing polyester synthesized by the reaction of fluoro-olefin epoxide with a cyclic acid anhydride.

In the second group methods, (per)fluoroalkyl groups or (per)fluoroalkylene groups are chemically bonded to a polymer material to give the characteristic properties inherent to the (per)fluoroalkyl or (per)fluoroalkylene groups to the surface of the polymer material. For example, it has been attempted to give water repellency, oil repellency, weather resistance and stain resistance inherent to (per)fluoroalkylene groups or (per)fluoroalkyl groups to a coating film surface. Japanese Patent Laid-Open Specification Nos. 3,407/82 and 3,408/82 disclose that a random copolymer produced from a fluoro-olefin used as a main component and a vinyl monomer copolymerizable with the fluoro-olefin forms a coating film having excellent weather resistance, and further Japanese Patent Laid-open Specification No. 136,666/83 discloses that the above described coating film is effective as a stainproofing film in water. Japanese Patent Laid-open Specification Nos. 34,866/83 and 34,867/83 disclose that a random copolymer produced from a (per)fluoroalkyl group-containing acrylic acid ester or methacrylic acid ester used as a main component and a vinyl monomer copolymerizable therewith forms a coating film having excellent weather resistance, water repellency, oil repellency and stain resistance. Further, Japanese Patent Laid-open Specification No. 11,572/82 discloses that a hardened epoxy resin film synthesized from a resin having epoxy groups as a functional group and an amine or diamine having perfluoroalkyl groups exhibits water repellency and oil repellency.

In the third group methods, a fluorine-containing compound is added to a polymer material to give characteristic properties inherent to the fluorine-containing compound to the surface of the polymer material. For example, in Japanese Patent Laid-open Specification Nos. 14,648/82 and 192,445/82, a (per)fluoroalkyl group-containing surfactant is added to a vinyl chloride resin film. Polymer Bulletin, Vol. 5, 335 (1981) and Japanese Patent Laid-open Specification No. 179,246/82 disclose methods for giving water repellency and oil repellency to the surface of polymethyl methacrylate, wherein a vinyl polymerizable double bond is added to one end of the molecular chain of polymethyl methacrylate to produce a

macromonomer, the macromonomer is copolymerized with an acrylic acid ester having perfluoroalkyl groups to synthesize a graft copolymer having branches consisting of polymethyl methacrylate and a backbone consisting of perfluoroalkyl group-containing acrylic acid esters arranged in sequence, and the resulting graft copolymer is added to the polymethyl methacrylate.

However, the above described methods for modifying polymer material surface have the following drawbacks. That is, in the first group methods, a component having a compatibility with polymer material forms a random copolymer or polycondensate, and hence the random copolymer or polycondensate containing fluorine atoms has not a satisfactorily high affinity to the polymer material, and cannot modify permanently the polymer material surface.

In the second group methods, when the amount of fluorine-containing monomers constituting a fluorine-containing polymer is very small, the fluorine-containing polymer cannot give the properties inherent to (per)fluoroalkyl group or (per)fluoroalkylene group to polymer material surface. As the amount of fluorine-containing monomers constituting a fluorine-containing polymer increases, there appears the effect of the fluorine-containing polymer for modifying polymer material surface, and moreover the durability of the modifying effect for the polymer material surface increases. However, a high cost is required in the production of the fluorine-containing polymer, and moreover it is difficult to give the property of fluorine-free monomer, which is used as another component for constituting the fluorine-containing polymer, to the fluorine-containing polymer.

The third group methods have the following drawbacks. In the method wherein a fluorine-containing surfactant is added to a polymer material to be modified, the surfactant bleeds out to the surface of the polymer material, and cannot permanently modify the polymer material surface. In the method, wherein a fluorine-containing graft copolymer is used, the synthesis of the graft copolymer is complicated, and moreover the molecular weight of the macromonomer must be kept to a relatively low molecular weight (number average molecular weight: 1,000—10,000) in order to maintain its reactivity for polymerization, and therefore the polymethyl methacrylate portion, which forms the branch of the graft copolymer, is an oligomer having a number average molecular weight of not larger than 10,000. Accordingly, when such graft copolymer is added to polymethyl methacrylate in order to modify it, the graft copolymer cannot be always fully catched in the polymethyl methacrylate due to the low molecular weight of the polymethyl methacrylate portion in the branch, and therefore it is doubtful that the graft copolymer is permanently effective for modifying the surface of the polymethyl methacrylate.

As described above, the surface of polymer material has not yet been fully and satisfactorily modified in an industrially easy method.

Bearing these problems in mind, the inventors have made various investigations and found out a surprising effect that, when a polymer material to be modified is mixed with a specifically limited block copolymer consisting of a polymer portion having (per)fluoroalkyl groups or (per)fluoroalkylene groups (hereinafter, refer to as a fluorine-containing polymer portion) and a polymer portion having a compatibility with the polymer material, the surface of the polymer material can be easily, conspicuously and permanently modified in an industrial scale. As the result, the present invention has been accomplished.

The feature of the present invention lies in a method for modifying the surface of a polymer material, by mixing with the polymer material a block copolymer consisting of a fluorine-free polymer portion compatibile with the base resin of the polymer material and a fluorine-containing polymer portion,

said block copolymer having been produced through the following first and second steps,

in the first step, either a fluorine-containing vinyl monomer which forms a fluorine-containing polymer portion, or a fluorine-free vinyl monomer which forms a polymer portion compatible with the base resin of the polymer material, is polymerized in the presence of a polymer peroxide as a polymerization initiator to produce a peroxy bond-containing polymer, and

in the second step, either a fluorine-free vinyl monomer or a fluorine-containing vinyl monomer, both the vinyl monomers being used in such a manner that, when a fluorine-containing vinyl monomer is used in the first step, a fluorine-free vinyl monomer is used in the second step, and when a fluorine-free vinyl monomer is used in the first step, a fluorine-containing vinyl monomer is used in the second step, is polymerized in the presence of a polymerization initiator of the peroxy bond-containing polymer obtained in the first step.

The polymeric peroxide to be used in the production of the block copolymer of the present invention is a compound having at least two peroxy bonds in one molecule. The polymeric peroxide is a compound represented by the following general formulae (I)—(VII).

That is, as the polymeric peroxide, there can be used a polymeric peroxide having the following general formula (I)

$$\left[ \overset{\overset{O}{\|}}{C} R_1 \overset{\overset{O}{\|}}{C} O R_2 O \overset{\overset{O}{\|}}{C} R_1 \overset{\overset{O}{\|}}{C} OO \right]_n \qquad (I)$$

wherein $R_1$ represents an alkylene or substituted alkylene group having 1—18 carbon atoms, a cycloalkylene or substituted cycloalkylene group having 3—15 carbon atoms, a phenylene group or a

substituted phenylene group having 7—18 carbon atoms; $R_2$ represents an alkylene or substituted alkylene group having 2—10 carbon atoms,

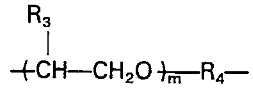

(wherein $R_3$ represents a hydrogen atom or a methyl group, $R_4$ represents an alkylene or substituted alkylene group having 2—10 carbon atoms, and m is a positive integer of 1—13),

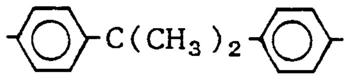 or 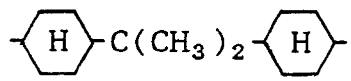 ;

and n is a positive integer of 2—30,

a polymeric peroxide having the following general formula (II)

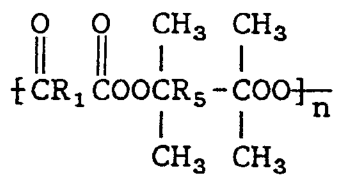

(II)

wherein $R_1$ and n have the same meanings as in the general formula (I); and $R_5$ represents an ethylene group, a phenylene group or an acetylene group,

a polymeric peroxide having the following general formula (III)

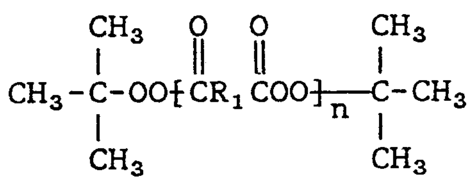

(III)

wherein $R_1$ and n have the same meanings as in the general formula (I),

a polymeric peroxide having the following general formula (IV)

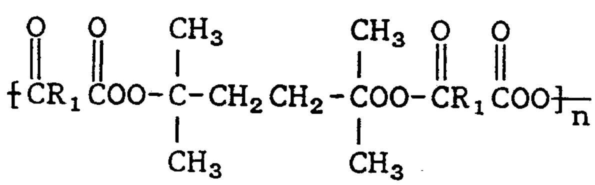

(IV)

wherein $R_1$ and n have the same meanings as in the general formula (I),

a polymeric peroxide having the following general formula (V)

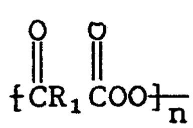

(V)

wherein $R_1$ and n have the same meanings as in the general formula (I),

a polymeric peroxide having the following general formula (VI)

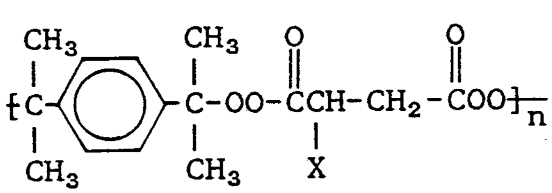

(VI)

wherein X represents a hydrogen atom, a methyl group or a chlorine atom, and n is a positive integer of 2—30, and

a polymeric peroxide having the following general formula (VII)

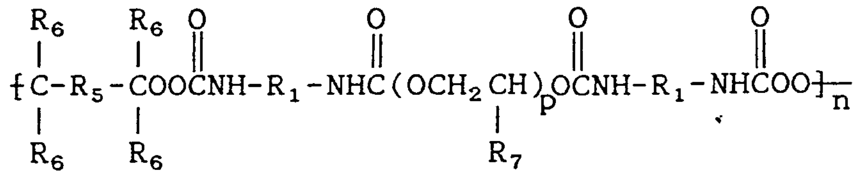 (VII)

wherein $R_1$ and n have the same meanings as in the general formula (I); $R_5$ has the same meaning as in the general formula (II); $R_6$ and $R_7$ represent a hydrogen atom or a methyl group; and p is a positive integer of 1—100.

The polymeric peroxide having the general formula (I) includes

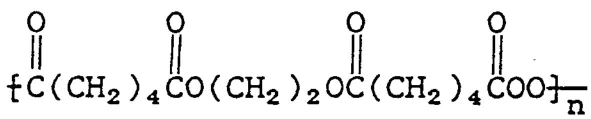 ,

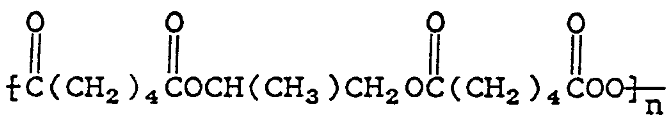 ,

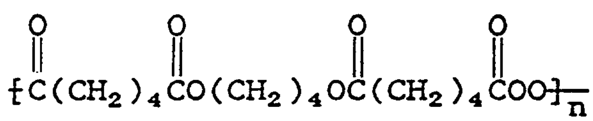 ,

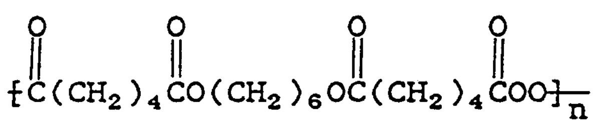 ,

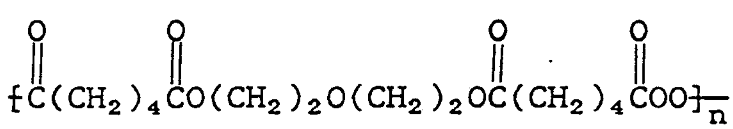 ,

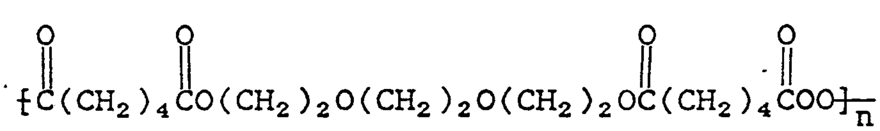 ,

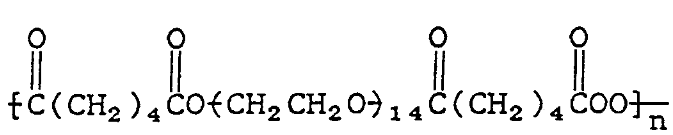 ,

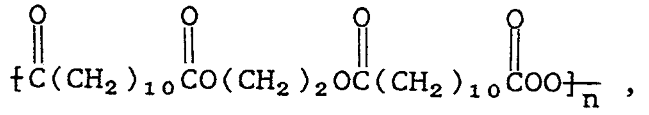

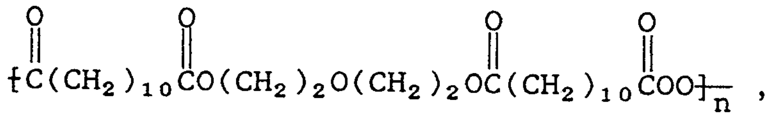

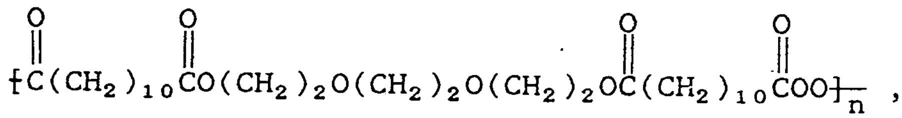

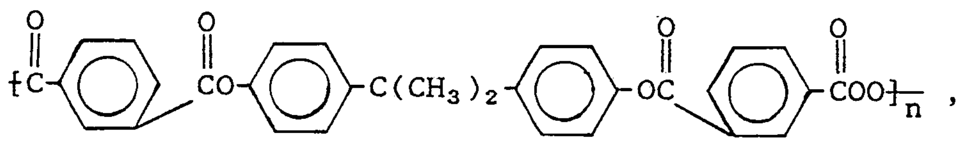

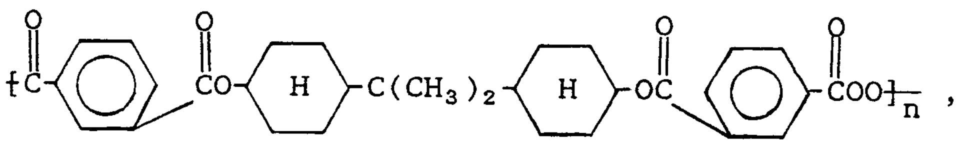

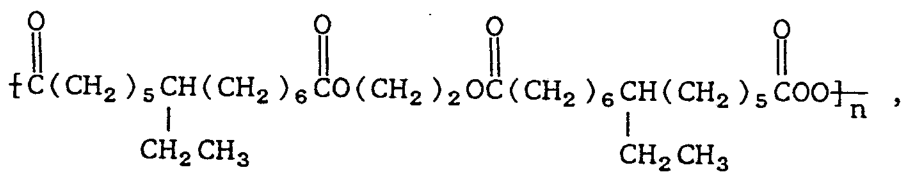

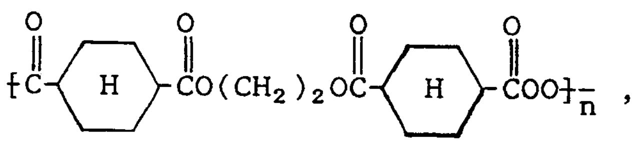

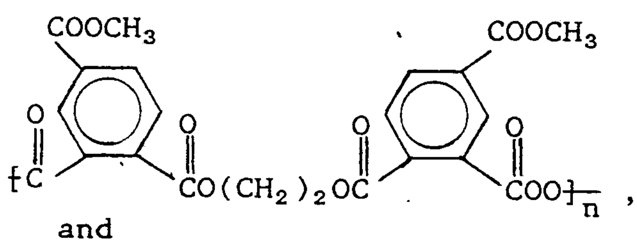

and

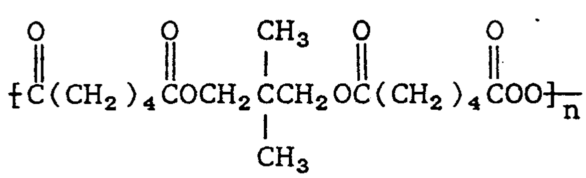

(in all of the above described formulae, n represents a positive integer of 2—30).

The polymeric peroxide having the general formula (II) includes

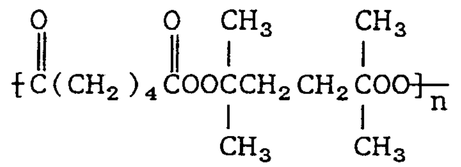
,

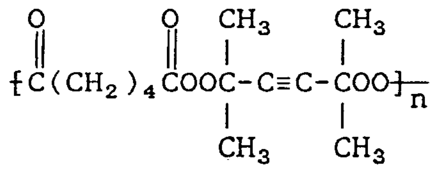
,

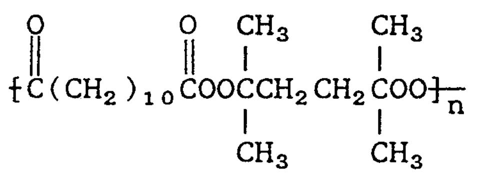
,

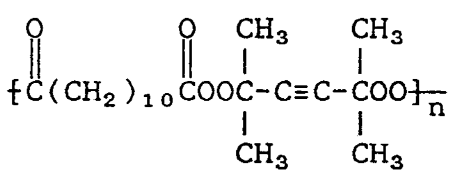
,

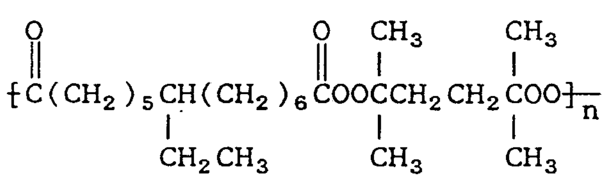
,

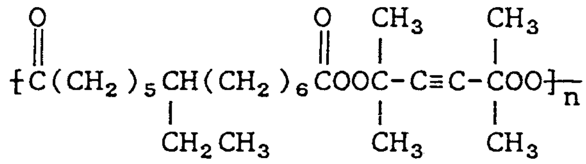

,

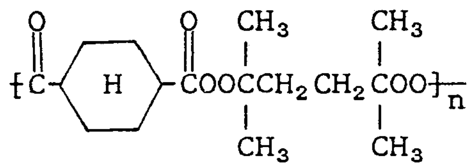

,

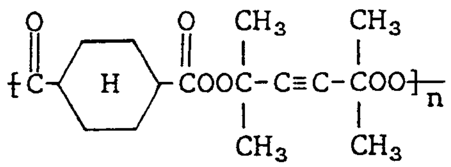

,

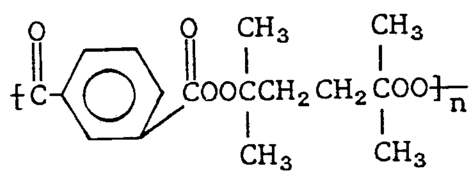

,

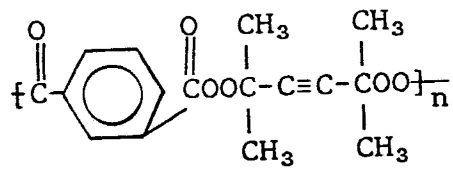

,

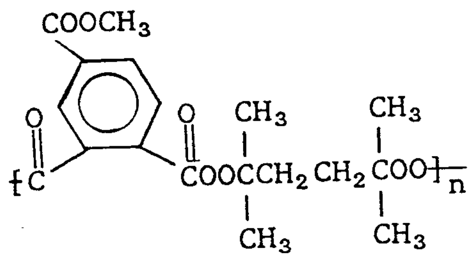

,

and

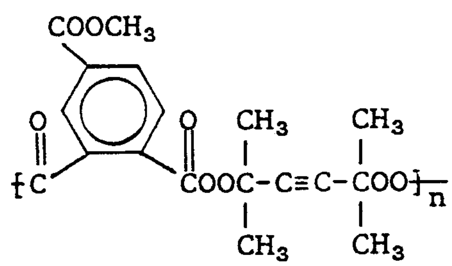

(in all of the above described formulae, n represents a positive integer of 2—30).

The polymeric peroxide having the general formula (III) includes

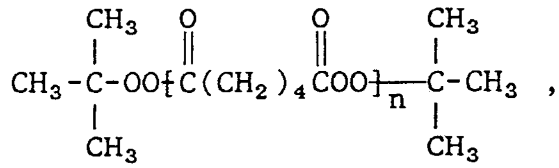

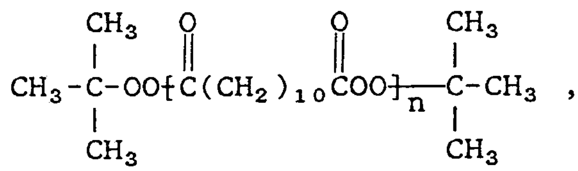

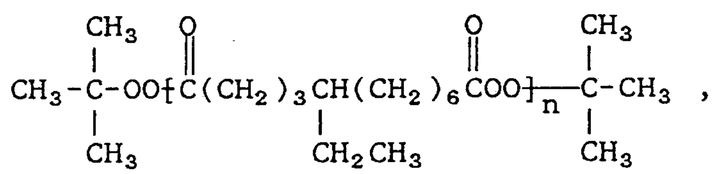

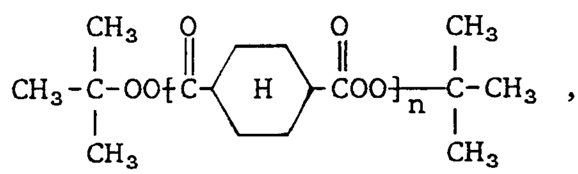

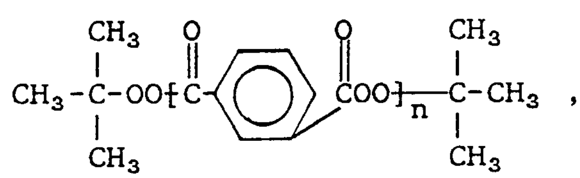

and

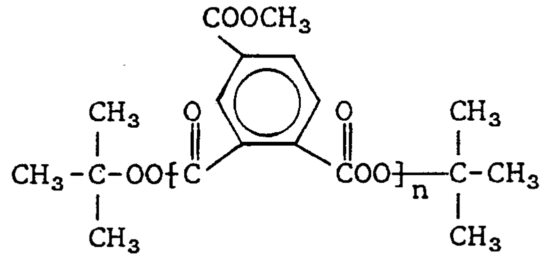

(in all of the above described formulae, n represents a positive integer of 2—30).

The polymeric peroxide having the general formula (IV) includes

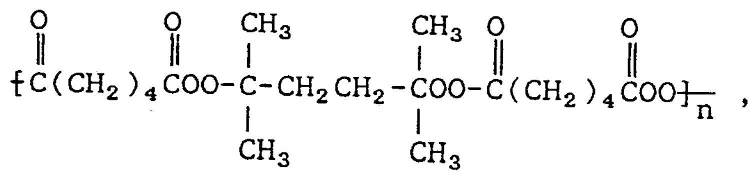

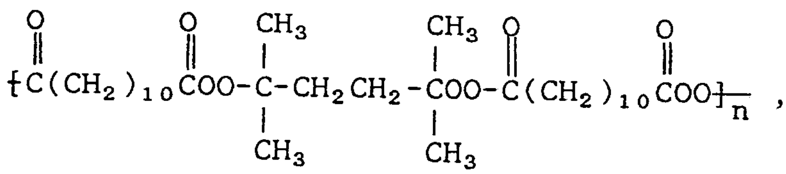

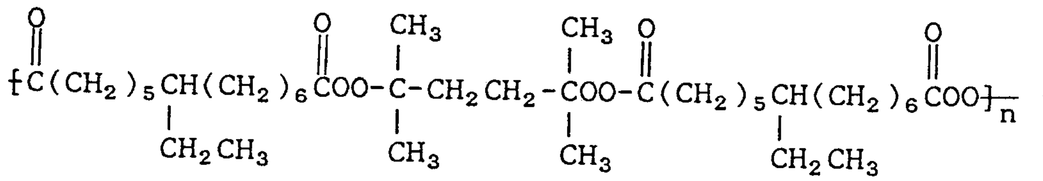

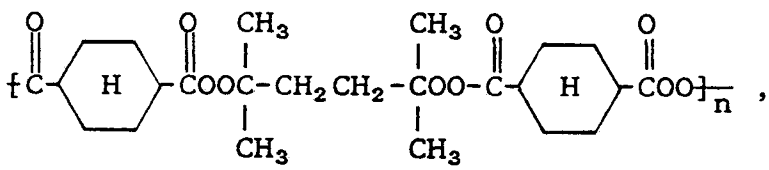

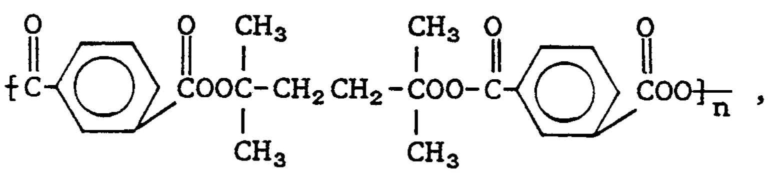

and

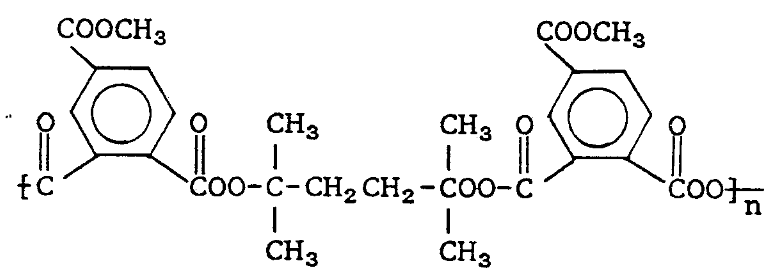

(in all of the above described formulae, n represents a positive integer of 2—30).

The polymeric peroxide having the general formula (V) includes

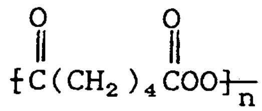 , 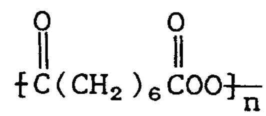 ,

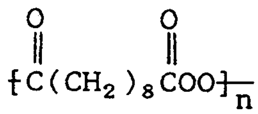 , 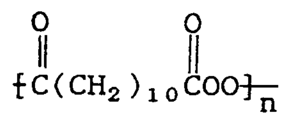 ,

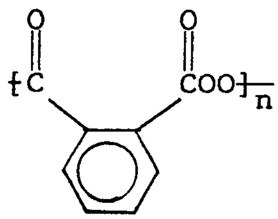 , 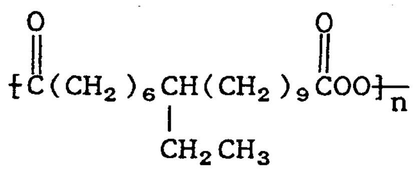 ,

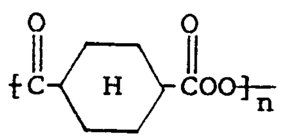 and 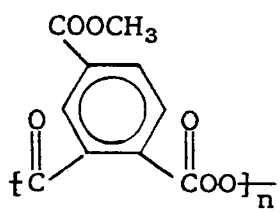

(in all of the above described formulae, n represents a positive integer of 2—30).

The polymeric peroxide having the general formula (VII) includes

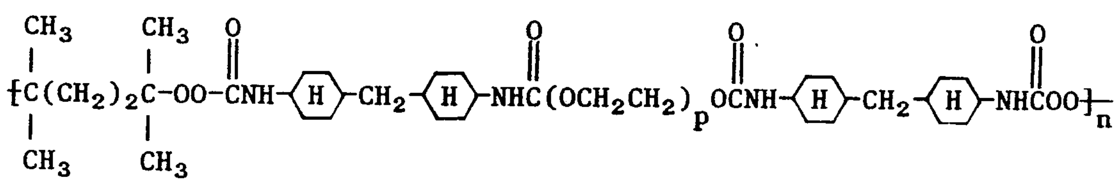 ,

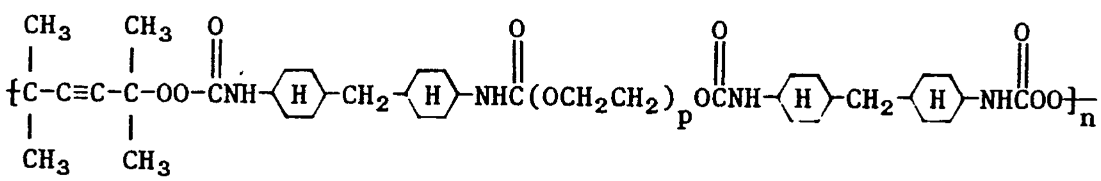 ,

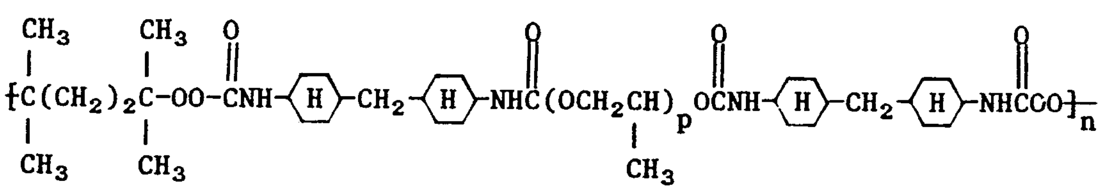 ,

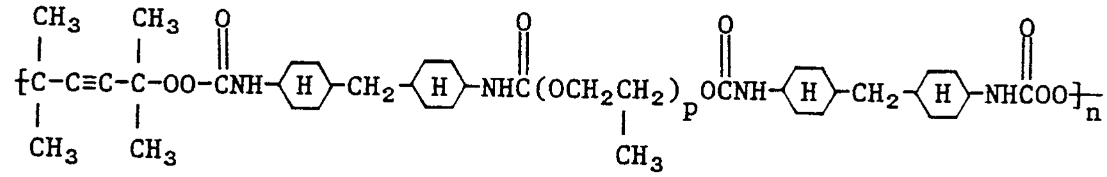 ,

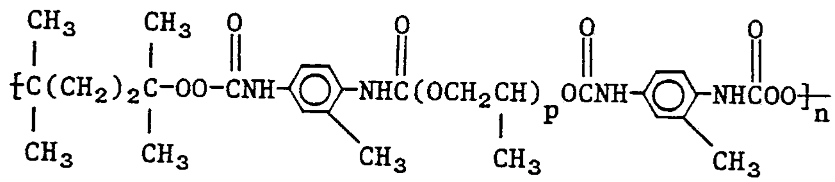 ,

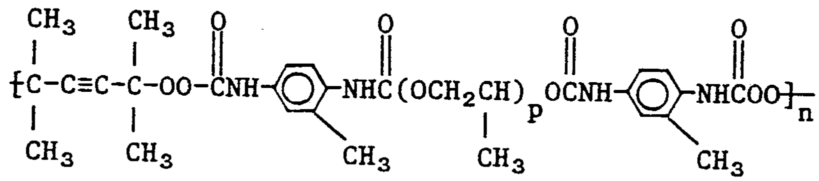 ,

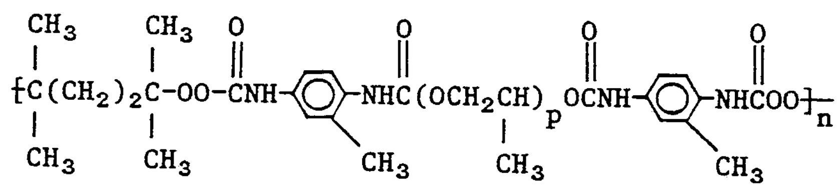 ,

and

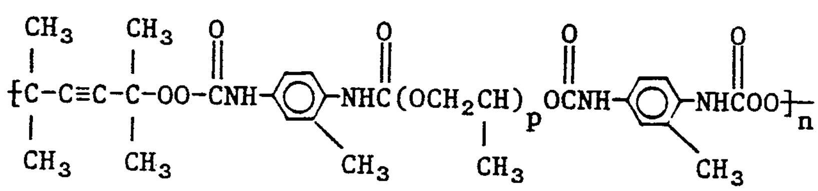

(in all of the above described formulae, p is a positive integer of 1—100, and n is a positive integer of 2—30).

The above described polymeric peroxide can be used alone or in admixture of at least two peroxides. Further, in all of the above described polymeric peroxides other than the polymeric peroxides represent by the general formula (III), the terminal group may be any of peracid, carboxylic acid, carboxylate, acyloxyl group and aroyloxyl group.

The fluorine-containing vinyl monomer, which forms a fluorine-containing polymer portion constituting one of the molecular chains of the block copolymer to be used in the present invention, includes fluorine containing vinyl monomers repreented by the following general formula:

$$CH_2 = CR_{11}\ COOR_{12}\ R_f$$

wherein

$R_{11}$ represents a hydrogen atom or a methyl group;

$R_{12}$ represents $—C_pH_{2p}—$, $—C(C_pH_{2p+1})H—$ or $—CH_2C(C_pH_{2p+1})H—$;

$R_f$ represents $—C_nF2_{n+1}$, $—(CF_2)_nH$,

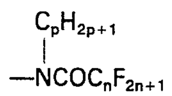 or 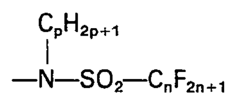

wherein p is a positive integer of 1—10, n is a positive integer of 1—16.

The fluorine-containing vinyl monomer having the general formula includes

$CF_3(CF_2)_7CH_2CH_2OCOCH{=}CH_2$,

$CF_3(CF_2)_4CH_2CH_2OCOC(CH_3){=}CH_2$,

$CF_3CH_2OCOCH{=}CH_2$,

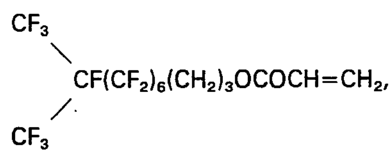

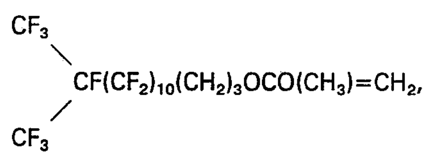

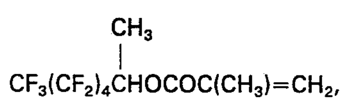

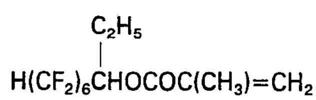

$H(CF_2)_8CH_2OCOCH{=}CH_2$,

$H(CF_2)_4CH_2OCOCH{=}CH_2$,

$H(CF_2)_6CH_2OCOC(CH_3){=}CH_2$,

$C_7F_{15}CON(C_2H_5)CH_2OCOC(CH_3){=}CH_2$,

$C_2F_5CON(C_2H_5)CH_2OCOCH{=}CH_2$,

$CF_3(CF_2)CON(CH_3)CH(CH_3)CH_2OCOCH{=}CH_2$,

$CH_3(CF_2)_7CON(CH_2CH_2CH_3)CH_2CH_2OCOC(CH_3){=}CH_2$

$CF_3(CF_2)_7SO_2N(CH_3)CH_2CH_2OCOC(CH_3)=CH_2$,

$CF_3(CF_2)_7SO_2N(CH_3)CH_2CH_2OCOCH=CH_2$,

$C_8F_{17}SO_2N(CH_3)(CH_2)_{10}OCOCH=CH_2$,

$C_2F_5SO_2N(C_2H_5)CH_2CH_2OCOC(CH_3)CH_2$,

$C_8F_{17}SO_2N(CH_3)(CH_2)_4OCOCH=CH_2$,

$C_2F_5SO_2N(C_3H_7)CH_2CH_2OCOC(CH_3)=CH_2$,

and

$C_2F_5SO_2N(C_2H_5)C(C_2H_5)HCH_2OCOCH=CH_2$

The embodiments of the fluorine-containing vinyl monomer, which forms a fluorine-containing polymer, are the above described compounds. These fluorine-containing vinyl monomers are used alone or in admixture of at least two members.

The vinyl monomer, which forms a fluorine-free polymer portion constituting the other molecular chain of the block copolymer to be used in the present invention, is properly selected depending upon the compatibility of the copolymer with the base resin of the polymer material to be modified.

As the vinyl monomer, there can be used, for example, lower alkyl (meth)acrylates (in the specification and claims, the term "(meth)acrylic acid" means acrylic acid and methacrylic acid), such as methyl (meth)acrylate, ethyl (meth)acrylate, n-propyl (meth)acrylate, isopropyl (meth)acrylate and glycidyl (meth)acrylate; higher alkyl (meth)acrylates, such as n-butyl (meth)acrylate, isobutyl (meth)acrylate, tert.butyl (meth)acrylate, n-hexyl (meth)acrylate, cyclohexyl(meth)acrylate, 2-ethylhexyl (meth)acrylate, octyl (meth)acrylate, lauryl (meth)acrylate and stearyl (meth)acrylate; lower fatty acid vinyl esters, such as vinyl acetate and vinyl propionate; higher fatty acid vinyl esters, such as vinyl butyrate, vinyl caproate, vinyl 2-ethylhexanoate, vinyl laurate and vinyl stearate; aromatic vinyl monomers, such as styrene, vinyltoluene and vinylpyrrolidone; amido group-containing vinyl monomers, such as (meth)acrylamide, N-methylol(meth)acrylamide and N-methoxylmethyl(meth)acrylamide; hydroxyl group-containing vinyl monomers, such as hydroxyethyl (meth)acrylate, hydroxypropyl (meth)acrylate and allyl alcohol; carboxylic acid group-containing vinyl monomers, such as (meth)acrylic acid, itaconic acid, crotonic acid, fumaric acid and maleic acid; butadiene; vinyl chloride; vinylidene chloride; (meth)acrylonitrile; dibutyl fumarate; maleic anhydride; (meth)allyl glycidyl ether; alkali metal salt, ammonium salt and organic amine salt of radical-polymerizable unsaturated carboxylic acids, such as itaconic acid, (meth)acrylic acid, crotonic acid; radical-polymerizable unsaturated monomers having sulfonic acid group, such as styrenesulfonic acid, and their alkali metal salt, ammonium salt and organic amine salt; quaternary ammonium salts derived from (meth)acrylic acid, such as 2-hydroxy-3-methacryloxypropyl-trimethylammonium chloride; (meth)acrylic acid esters of alcohol having tertiary amino group, such as methacrylic acid diethylamino ester, and their quaternary ammonium salt.

The compatibility of a fluorine-free vinyl polymer portion with a polymer material to be modified is judged by a visual observation of a film of a mechanically kneaded homogeneous mixture of the polymer material and the fluorine-free vinyl polymer. That is, when the film is transparent, or, when, although the film is not transparent, a fluorine-free vinyl polymer is homogeneously dispersed in a polymer material, the vinyl polymer is judged to be compatible with the polymer material. When a vinyl polymer is poor in the compatibility with a polymer material, the particles of the vinyl polymer are dispersed in the polymer material in the form of a visible particle size, and the mixture is a heterogeneous blend.

Compatibility of typical mutual polymers is disclosed in J. Macromol. Sci., *C7*, 251 (1972), and in Journal of the Adhesion Society of Japan, Vol. 11, No. 1, page 2 (1975). Some of combinations of a polymer material and a vinyl polymer compatible therewith are as follows.

| Polymer material | Compatible vinyl polymer |
|---|---|
| Polymethyl methacrylate resin (for example, trademark: Acrypet M, made by Mitsubishi Rayon Co., Ltd.) | Polymethyl methacrylate, Styrene/methyl methacrylate copolymer, Polyvinyl chloride, Methyl vinyl ether/maleic anhydride copolymer |

| Polymer material | Compatible vinyl polymer |
|---|---|
| Polyvinyl chloride resin (for example, trademark: Nikavinyl P1050, made by Nippon Carbide Industries Co., Ltd.) | Polyvinyl chloride, Polymethyl methacrylate, Polyethyl methacrylate, Polybutyl methacrylate, Polychloroprene, Acrylonitrile/butadiene copolymer, Ethylene/vinyl acetate copolymer, Methyl methacrylate/ethyl methacrylate copolymer |
| Polystyrene resin (for example, trademark: Styron 666, made by Asahi-Dow Limited) | Polystyrene, Polyvinyl methyl ether |
| Ethylene-vinyl acetate resin (for example, trademark: Soarlex R—FH, made by Nippon Synthetic Chemical Industry Co., Ltd.) | Polyvinyl acetate, Polyvinyl chloride, Polyvinylidene chloride, Vinyl chloride/vinyl acetate copolymer, Vinyl chloride/vinyl acetate/acrylic acid ester copolymer, Ethylene/vinyl acetate copolymer |
| Polyethylene resin | Polybutadiene, Ethyl acrylate/acrylonitrile copolymer, Polyethyl acrylate, Polyethylene |
| Polyvinyl methyl ether resin | Polystyrene |
| Vinyl chloride-vinyl acetate resin (for example, trademark: S-lec C, made by Sekisui Chemical Co., Ltd.) | Polymethyl methacrylate, Acrylonitrile/butadiene copolymer, Vinyl chloride/vinyl acetate copolymer |
| Styrene-maleic anhydride resin (for example, trademark: Stylite CM-2, made by Daido Industry Co., Ltd.) | Polymethyl methacrylate, Polyvinyl acetate, Styrene/maleic anhydride copolymer |
| Polyester resin (for example, trademark: Ester Resin 20, made by Toyo Boseki Co., Ltd.) | N-vinylpyrrolidone/vinyl acetate copolymer, Vinyl chloride/vinylidene chloride/acrylic acid ester copolymer |
| Polyphenylene oxide resin | Polystyrene |
| Polyurethane resin (for example, trademark: 5740 × 1, made by Nippon Zeon Co., Ltd.) | Polyvinyl chloride, Polyvinylidene chloride, Vinyl chloride/vinyl acetate copolymer, N-vinylpyrrolidone/vinyl acetate copolymer |
| Nitrocellulose (for example, trademark: RS-1/2, made by Asahi Chemical Industry Co., Ltd.) | Polyvinyl acetate, Polymethyl methacrylate, Polymethyl acrylate |
| Cellulose acetate butyrate (for example, trademark: EAB-381—2, made by Eastman Chem. Co.) | Polyvinyl acetate, Ethylene/vinyl acetate copolymer |
| Petroleum resin (for example, trademark: Nisseki Neopolymer 150, made by Nippon Petrochemicals Co., Ltd.) | Polystyrene, N-vinylpyrrolidone/vinyl acetate copolymer |
| Coumarone resin (for example, trademark: TG, made by Mitsubishi Chemical Industries, Ltd.) | Polystyrene, N-vinylpyrrolidone/vinyl acetate copolymer |
| Indene resin (for example, trademark: VM-1/2, made by Nippon Steel Corporation) | Polystyrene, Polymethyl methacrylate, Polvinyl chloride, Polyvinylidene chloride, Vinyl chloride/vinyl acetate copolymer, Ethylene/vinyl acetate copolymer |
| Acrylic fiber | Polyacrylonitrile, Acrylonitrile/methyl acrylate resin |

| Polymer material | Compatible vinyl polymer |
|---|---|
| Nylon fiber | Polyacrylamide, Acrylamide/acrylic acid ester copolymer |
| Vinylidene chloride fiber (for example, trademark: Krehalon, made by Kureha Chemical Industry Co., Ltd.) | N-vinylpyrrolidone/vinyl acetate copolymer, Ethylene/vinyl acetate copolymer |
| Acrylonitrile-butadiene rubber (for example, trademark: Hycar 1043, made by Nippon Zeon Co., Ltd.) | Polyvinyl chloride, Vinyl chloride/vinyl acetate copolymer |
| Polyisoprene rubber | Polymethyl methacrylate |
| Polychloroprene rubber | Polyvinyl chloride |
| Polyether rubber (polyepichlorohydrin) | Styrene/acrylonitrile copolymer, Styrene/methyl methacrylate copolymer |
| Natural rubber | Polymethyl methacrylate |

In order to improve moreover the compatibility of the polymer material with the fluorine-free polymer portion of the block copolymer of the present invention, a vinyl monomer having a functional group reactive with the functional group contained in the polymer material may be copolymerized into the fluorine-free polymer portion. Further, other vinyl monomer may be copolymerized into the fluorine-free polymer portion so long as the fluorine-free polymer portion does not deterioriate its compatibility with the polymer material.

The block polymer of the present invention can be easily produced by using the above described polymeric peroxide in an ordinary bulk polymerization process, suspension polymerization process, solution polymerization process or emulsion polymerization process. The polymerization mechanism in the production of the block copolymer of the present invention can be explained as follows, for example, in the case where a vinyl monomer which forms a fluorine-free polymer portion is used in the first step, and a vinyl monomer which forms a fluorine-containing polymer portion is used in the second step. That is, when a vinyl monomer which forms a fluorine-free polymer is polymerized in the presence of a polymeric peroxide, a vinyl polymer having peroxy bonds in its molecular chain is firstly obtained, and when the resulting peroxy bond-containing vinyl polymer is polymerized together with a fluorine-containing vinyl monomer which forms a fluorine-containing polymer portion, the peroxy bond-containing vinyl polymer is cleaved at the peroxy bonds contained therein, and an aimed block copolymer is obtained in very efficiently.

In the production of the block copolymer of the present invention, the amount of a polymeric peroxide to be used in the first step is 0.5—20 parts by weight based on 100 parts by weight of a vinyl monomer to be used in the first step, the polymerization temperature is about 60—130°C and the polymerization time is about 2—10 hours.

The polymerization reaction in the second step is carried out under a condition of a polymerization temperature of about 60—140°C and a polymerization time of about 3—15 hours. The weight ratio of the fluorine-free polymer portion to the fluorine-containing polymer portion in a block copolymer is 1/19—19/1, preferably 1/9—9/1. A block copolymer having a weight ratio of fluorine-containing polymer portion to fluorine-free polymer portion of less than 1/19 is poor in the effect for modifying the surface of polymer material, and a block copolymer having a weight ratio of fluorine-free polymer portion to fluorine-containing polymer portion of less than 1/19 is poor in the compatibility with the polymer material, and it is difficult to maintain permanently the effect for modifying the surface of polymer material.

The polymer material to be modified in its surface in the present invention includes resin, such as plastics, paint or film, made of synthetic polymer or natural polymer.

As the synthetic polymer material, there can be mentioned polyacrylic resin, polyvinyl chloride resin, polyvinylidene chloride resin, polystyrene resin, ABS resin, styrene-butadiene resin, AS resin, polyethylene resin, polypropylene resin, chlorinated polyethylene resin, chlorinated polyproplene resin, polyamide resin, polyester resin, epoxy resin, polyphenylene oxide resin, polycarbonate resin, modified polypropylene oxide resin, polyurethane resin, nitro-cellulose resin, cellulose acetate resin, ethylcellulose resin, cellulose acetate butyrate resin, cellulose acetate propionate resin, ethylene-vinyl acetate resin, urea resin, melamine resin, polyvinyl ether resin, petroleum resin, coumarone resin, indene resin, phenolic resin, acetal resin, and acrylonitrile-butadiene resin.

As the methods for adding the specifically limited block copolymer of the present invention to the above polymer material, there can be used a method wherein the block copolymer is mixed with a polymer material during its shaping, or the block copolymer is dissolved in a solvent together with a polymer material, and then the mixture of the block copolymer and the polymer material is formed into a film. The addition amount of the block copolymer to a polymer material is preferably within the range of 0.01—30 parts by weight based on 100 parts by weight of the polymer material. When the addition amount is less than 0.01 part by weight, the effect of the block copolymer of the present invention does not fully appear, and when the addition amount exceeds 30 parts by weight, the characteristic properties inherent to polymer material may be lost.

The block copolymer of the present invention can be added alone to a polymer material to be modified, but may be added to the polymer material together with commonly known surfactants. The use amount of the surfactant is preferably 0—50% by weight based on the amount of the block copolymer of the present invention. When the amount of the surfactant is larger than 50% by weight, the effect of the present invention does not fully appear.

The method of the present invention, wherein the surface of a polymer material is modified by adding the above described specifically limited block copolymer to the polymer material, has the following merits. That is, properties, such as corrosion resistance, solvent resistance, chemical resistance, anti-blocking property, low frictional property, stain resistance, water repellency, oil repellency and weather resistance, can be given to the surface of various polymer materials by the action characteristic of the fluorine-containing polymer portion, particularly by the characteristic of the (per)fluoroalkylene group or (per)fluoroalkyl group of the block copolymer, and moreover the above described effect can be maintained in the polymer material for a long period of time by the characteristic of the polymer portion having a compatibility with the polymer material. The method of the present invention not only can be used in textile, clothing, leather, paint and the like, but also can be expected to be used as an improver for the adaptability of medical plastics to living body. 1 poise equals 1 dPas.

The following examples are given for the purpose of illustration of this invention and are not intended as limitations thereof. In the examples, "parts" and "%" mean by weight.

Reference example 1

(A) Production of a peroxy bond-containing polymer:

Into a reactor equipped with a thermometer, a stirrer and a reflux condenser was charged 300 parts of xylene, and while introducing nitrogen gas into the reactor and heating the reaction system at 70°C, a mixed solution (I) consisting of

| | |
|---|---|
| methyl ethyl ketone: | 150 parts |
| xylene: | 49 parts |
| Methyl methacrylate: | 120 parts |
| butyl methyacrylate: | 120 parts |

and

$$\left[ \overset{O}{\overset{\|}{C}}O(CH_2)_4O\overset{O}{\overset{\|}{C}}(CH_2H_4O)_3\overset{O}{\overset{\|}{C}}(CH_2)_4\overset{O}{\overset{\|}{C}}OO \right]_{10}: \quad 35 \text{ parts}$$

was charged into the reactor in 2 hours, and a polymerization reaction was further effected for 3.5 hours. The resulting solution was a transparent solution containing 34.3% of a peroxy bond-containing polymer and having a viscosity of 1.6 poises at 25°C.

(B) Production of a block copolymer:

In a reactor equipped with a thermometer, a stirrer and a reflux condenser, a mixed solution (II) consisting of

| | |
|---|---|
| the methyl ethyl ketone/xylene mixed solution of peroxy bond-containing polymer obtained in the above described step (A): | 140 parts |
| $CH_2{=}CH\overset{\overset{\displaystyle O}{\|}}{C}OCH_2CH_2(CF_2)_7CF_3$: | 43 parts |

and

| | |
|---|---|
| methyl ethyl ketone: | 80 parts |

was heated at 70°C for 6 hours while blowing nitrogen gas into the reactor, to effect a block copolymerization reaction and to obtain a translucent bluish-white dispersion containing 34.5% of a block copolymer and having a viscosity of 3.1 poises at 25°C.

Reference Example 2

In a reactor equipped with a thermometer, a stirrer and a reflux condenser, a mixed solution consisting of

| | |
|---|---|
| the methyl ethyl ketone/xylene mixed solution of peroxy bond-containing polymer obtained in Step (A) in Reference example 1: | 120 parts |
| $CH_2{=}CH{-}\overset{\overset{\displaystyle O}{\|}}{C}OCH_2CH_2(CF_2)_7CF_3$: | 9.1 parts |

and

| | |
|---|---|
| xylene: | 16.9 parts |

was heated at 70°C for 4 hours while blowing nitrogen gas into the reactor, to effect a block copolymerization reaction and to obtain a translucent white dispersioon containing 34.3% of a block copolymer and having a viscosity of 3.6 poises at 25°C.

Reference Example 3

In a reactor equipped with a thermometer, a stirrer and a reflux condenser, a mixed solution consisting of

| | |
|---|---|
| the methyl ethyl ketone/xylene mixed solution of peroxy bond-containing polymer obtained in Step (A) in Reference example 1: | 100 parts |
| $CH_2{=}\overset{\overset{\displaystyle CH_3}{\|}}{C}{-}\overset{\overset{\displaystyle O}{\|}}{C}OCH_2(CF_2CF_2)_3H$: | 30 parts |

and

| | |
|---|---|
| methyl ethyl ketone: | 41 parts |

was heated at 70°C for 6 hours while blowing nitrogen gas into the reactor, to effect a block copolymerization reaction and to obtain a white dispersion containing 34.5% of a block copolymer and having a viscosity of 2.7 poises at 25°C.

Reference example 4

Into a reactor equipped with a thermometer, a stirrer and a reflux condenser was charged 60 parts of methyl ethyl ketone, and while introducing nitrogen gas into the reactor and heating the reaction system at 70°C, a mixed solution (II) consisting of:

| | |
|---|---|
| methyl ethyl ketone: | 40 parts |
| methyl methacrylate: | 24 parts |
| butyl methacrylate: | 24 parts |
| $CH_2{=}CH{-}\overset{\overset{O}{\|}}{C}OCH_2CH_2(CF_2)_7CF_3$: | 48 parts |

and

$$CH_3(CH_2)_3CH(C_2H_5)\overset{\overset{O}{\|}}{C}OOtBu:\quad 4\ parts$$

was charged into the reactor in 2 hours, and a polymerization reaction was further effected at 70°C for 5 hours and then at 80°C for 3 hours to obtain a translucent white solution containing 49.5% of a polymer. The resulting polymer had a number-average molecular weight $\overline{M}_n$ of 22,100 and a ratio of $\overline{M}_w/\overline{M}_n$ (weight-average molecular weight/number/average molecular weight) of 2.1.

Reference examples 5—7

Polymers were produced by the use of the same reactor as used in Reference example 4, wherein a mixed solution described in the following Table 1 was used in place of the mixed solution (II) in Reference example 4, and the polymerization condition was same as described in Reference example 3. The molecular weight of the resulting polymers is shown in Table 1.

Table 1

| | | Reference example | | |
|---|---|---|---|---|
| | | 5 | 6 | 7 |
| Mixed solution (parts) | Methyl ethyl ketone | 40 | 40 | 40 |
| | 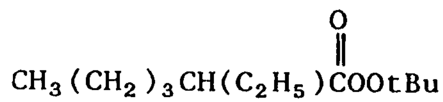 | 4 | 4 | 4 |
| | Methyl methacrylate | 40.8 | 48.0 | 40.8 |
| | Butyl methacrylate | 40.8 | 48.0 | 40.8 |
| | 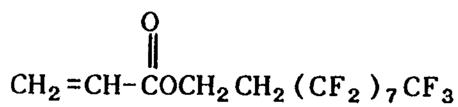 | 14.4 | - | - |
| | 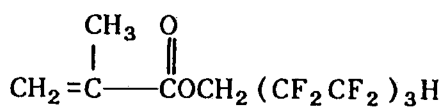 | - | - | 14.4 |
| Color of polymer solution | | colorless and transparent | colorless and transparent | colorless and transparent |
| Content of polymer in polymer solution (weight %) | | 49.9 | 50.0 | 49.9 |
| Number-average molecular weight of polymer | | 20,600 | 16,800 | 19,800 |
| $\bar{M}_w/\bar{M}_n$ of polymer | | 2.6 | 2.3 | 2.7 |

Example 1—3

Each of the block copolymers synthesized in the above Reference examples 1—3 was added to the acrylic resin (hereinafter, this polymer may be referred to as matrix polymer) synthesized in the above Reference example 6, and the surface physical properties of the modified acrylic resin containing the block copolymer were measured.

The measured surface physical properties are surface adhesion, water repellency, oil repellency, water resistance, acid resistance and alkali resistance.

The measuring methods are described in the form of a footnote of Table 2, and obtained results are shown in Table 2.

In all of these test, a methyl ethyl ketone solution containing a sample modified resin in a concentration of 15% by weight was produced, and applied to a wash primer-treated iron plate such that a film having a thickness of 50 μm would be formed after drying. The film was dried in air for one day, and then the surface physical properties were measured.

Comparative examples 1—4

Surface physical properties of the polymers synthesized in the above Reference examples 4—7 or those of their blend with the matrix polymer were measured in the same manner as described in Examples 1—3. The obtained results are shown in Table 2.

Table 2(a)

| | Kind of fluorine-containing polymer | Resin composition (weight ratio) Fluorine-containing polymer/Matrix polymer | Content of perfluoro-acrylate in resin (wt.%) | Surface adhesion 1) (g) | Water and oil repellencies 2) | |
|---|---|---|---|---|---|---|
| | | | | | Water | Dodecane |
| Example 1 | Reference example 1 | 3/97 | 1.5 | 145 | 115 | 74 |
| | | 1/99 | 0.5 | 150 | 115 | 74 |
| Example 2 | Reference example 2 | 3/97 | 0.6 | 155 | 114 | 73 |
| | | 1/99 | 0.2 | 160 | 113 | 70 |
| Example 3 | Reference example 3 | 5/95 | 2.5 | 340 | 95 | 43 |
| | | 1/99 | 0.5 | 345 | 94 | 38 |
| Comparative example 1 | Reference example 4 | 3/97 | 1.5 | 305 | 108 | 66 |
| | | 1/99 | 0.5 | 300 | 107 | 64 |
| Comparative example 2 | Reference example 5 | 100/10 | 15 | 340 | 101 | 55 |
| Comparative example 3 | Reference example 6 | 0/100 | 0 | 510 | 86 | measurement is impossible |
| Comparative example 4 | Reference example 7 | 100/0 | 15 | 480 | 90 | 23 |

Table 2(b)

| | Water resistance 3) | | Acid resistance 4) | | Alkali resistance 5) | |
|---|---|---|---|---|---|---|
| | Appearance of film 6) | Oil repellency | Appearance of film | Oil repellency | Appearance of film | Oil repellency |
| Example 1 | ◎<br>◎ | 64<br>63 | ◎<br>◎ | 62<br>60 | ◎<br>◎ | 48<br>48 |
| Example 2 | ◎<br>◎ | 63<br>62 | ◎<br>◎ | 59<br>58 | ◎<br>◎ | 47<br>47 |
| Example 3 | ◎<br>◎ | 28<br>28 | ◎<br>◎ | 27<br>27 | ◎<br>◎ | 25<br>24 |
| Comparative example 1 | ◎<br>◎ | 46<br>44 | ◎<br>◎ | 44<br>43 | ◎<br>◎ | 32<br>30 |
| Comparative example 2 | ◎ | 49 | ◎ | 49 | ◎ | 28 |
| Comparative example 3 | Δ | measurement is impossible | × | measurement is impossible | ○ | measurement is impossible |
| Comparative example 4 | ◎ | measurement is impossible | ○ | measurement is impossibe | ○ | measurement is impossible |

Note:

1) A weight (g) necessary for peeling an adhesive-backed tape (trademark: Cellotape, sold by Nichiban Co., Ltd.) from a sample iron sheet.

2) A contact angle (degree) of a sample iron sheet with water or dodecane.

3) A sample iron sheet was immersed in water at 25°C for 400 hours and then washed with water for 20 minutes, and the sheet surface was wiped by a tissue paper (trademark: Kimwipe, sold by Jujo Kimberly Co., Ltd.) and then the iron sheet was left to stand for 1 hour at 25°C under a relative humidity of 50%. The oil repellency of the thus treated iron sheet was measured, and the appearance of the coating film was estimated according to the estimated standard described below.

Oil repellency: contact angle of a sample iron sheet with dodecane.

4) A sample iron sheet was immersed in a 10% aqueous solution of sulfuric acid at 25°C for 250 hours, and the immersed iron sheet was treated in the same manner as described in the above item 3). The oil repellency of the thus treated iron sheet was measured, and the appearance of the coating film was estimated in the same manner as described in the above item 3).

5) A sample iron sheet was immersed in a 5% aqueous solution of sodium hydroxide at 25°C for 50 hours, and the immersed iron sheet was treated in the same manner as described in the above item 3). The oil repellency of the thus treated iron sheet was measured, and the appearance of the coating film was estimated in the same manner as described in the above item 3).

6) Estimated standard:

◎: There is no change in the appearance of the resin film surface before and after the treatment.

○: Corroded portions are observed on the film surface by means of a scanning type electron microscope (magnification: 200 times).

△: Corroded portions are observed on the film surface by a naked eye.

×: Not less than 1% of the immersed surface area has been corroded.

It can be seen from Table 2 that an acrylic resin film containing the specifically limited fluorine-containing block copolymer of the present invention is superior in the water repellency, oil repellency, anti-blocking property and corrosion resistance to an acrylic resin film (Comparative example), which does not contain the specifically limited fluorine-containing block copolymer or contains a conventional fluorine-containing polymer different from the specifically limited fluorine-containing block copolymer. Further, it can be seen from Table 2 that the effect of the specifically limited block copolymer for modifying the resin film surface is permanent.

## Reference examples 8—12

(A) Production of a peroxy bond-containing polymer:

A peroxy bond-containing polymer was produced in the same manner as described in Reference example 1, except that a solvent described in the following Table 3 was used in an amount shown in Table 3 in place of 300 parts of xylene used in Reference example 1, Step (A), and a mixed solution described in Table 3 was used in place of the mixed solution (I) used in Reference example 1, Step (A). The content (wt.%) of a peroxy bond-containing polymer in the resulting reaction solution, and the viscosity of the reaction solution at 25°C are shown in Table 3.

(B) Production of a block copolymer:

A block copolymer was produced in the same manner as described in Reference example 1, step (B), except that a mixed solution having a composition shown in the following Table 4 was used in each Reference example in place of the mixed solution (II) used in Reference example 1, Step (B).

(C) Production of a matrix polymer:

A matrix polymer was produced according to the method described in Reference example 4 under a polymerization condition shown in the following Table 5 by the use of a mixed solution shown in Table 5 in place of the mixed solution (II) used in Reference example 4.

The content of the resulting polymer in the reaction solution and the molecular weight of the polymer are shown in Table 5.

TABLE 3(a)

| | | | Reference example | | | | |
|---|---|---|---|---|---|---|---|
| | | | 8 | 9 | 10 | 11 | 12 |
| Solvent 1) (parts) | xylene | | - | 40 | - | 50 | - |
| | toluene | | 62.4 | - | 40 | - | 50 |
| | methyl ethyl ketone | | - | - | - | - | - |
| | methyl isobutyl ketone | | - | 10 | 19 | 17 | - |
| Composition of mixed solution 2) (parts) | xylene | | - | 10 | - | 17 | - |
| | toluene | | 46.8 | - | 19 | - | - |
| | methyl ethyl ketone | | - | - | - | - | 50 |
| | methyl isobutyl ketone | | 46.8 | 40 | 40 | 50 | - |
| | 2-hydroxyethyl methacrylate | | 9.6 | 9.6 | 9.6 | 9.6 | 9.6 |
| | methyl methacrylate | | - | 19.2 | - | 28.8 | - |
| | butyl acrylate | | - | - | 38.4 | 28.8 | 19.2 |
| | 2-ethylhexyl methacrylate | | 38.4 | 19.2 | - | - | 19.2 |
| | styrene | | 28 | - | 9.6 | - | - |
| | acrylic acid | | 0.8 | - | - | - | 0.8 |

TABLE 3(b)

| | | Reference example | | | | | |
|---|---|---|---|---|---|---|---|
| | | | 8 | 9 | 10 | 11 | 12 |
| Composition of mixed solution 2) (parts) | 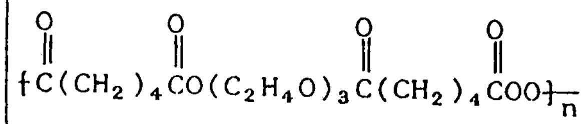 (n≅8) | | - | - | - | - | - |
| | 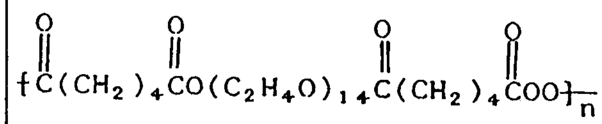 (n≅12) | | 8 | - | - | - | - |
| | 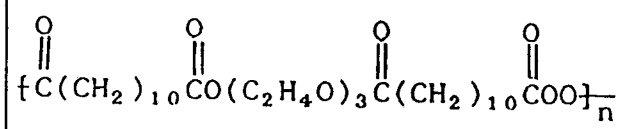 (n≅8) | | - | 6 | - | - | - |
| | 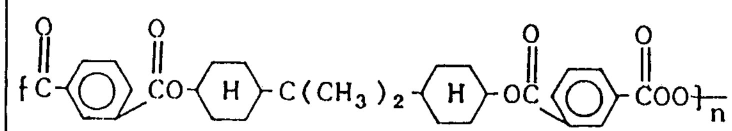 (n≅6) | | - | - | 3 | - | - |
| | 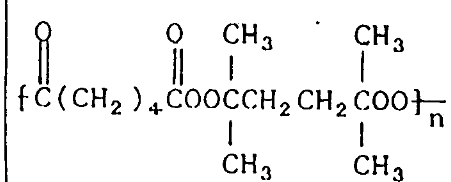 (n≅9) | | - | - | - | 5 | - |

TABLE 3(c)

| | | | Reference example | | | | |
|---|---|---|---|---|---|---|---|
| | | | 8 | 9 | 10 | 11 | 12 |
| Composition of mixed solution 2) (parts) | 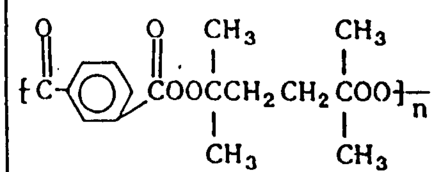 (n≅5) | | - | - | 3 | - | 5 |
| Content of a peroxy bound-containing polymer in the reaction solution (%) | | | 35.0 | 34.8 | 34.7 | 35.0 | 34.9 |
| Viscosity at 25°C of reaction solution containing a peroxy bond-containing polymer (poise) | | | 1.9 | 4.1 | 3.5 | 2.7 | 3.1 |

1) Solvent used in each Reference example in place of 300 parts of xylene used in Reference example 1, Step (A).

2) Composition of mixed solution used in each Reference example in place of the mixed solution (I) used in Reference example 1, Step (A).

TABLE 4(a)

| | | | Reference example | | | | |
|---|---|---|---|---|---|---|---|
| | | | 8 | 9 | 10 | 11 | 12 |
| Composition of mixed solution 1) (parts) | Solution of peroxy bond-containing polymer | | 100 | 100 | 100 | 100 | 100 |
| | $CH_2=CH-\overset{O}{\overset{\|}{C}}OCH_2(CF_2CF_2)_3H$ | | - | - | - | - | 15.9 |
| | $CH_2=CH-\overset{O}{\overset{\|}{C}}OCH_2CH_2(CF_2)_6CF_3$ | | 7.9 | - | - | - | - |
| | $CH_2=\overset{CH_3}{\overset{\mid}{C}}-\overset{O}{\overset{\|}{C}}OCH_2CF_3$ | | - | 31.1 | - | - | - |
| | $CH_2=\overset{CH_3}{\overset{\mid}{C}}-\overset{O}{\overset{\|}{C}}O(CH_2)_5OCF(CF_3)_2$ | | - | - | 22.2 | - | - |
| | $CH_2=CH-\overset{O}{\overset{\|}{C}}OCH_2\overset{C_2H_5}{\overset{\mid}{N}}COC_7F_{15}$ | | - | - | - | 14.0 | 15.9 |

TABLE 4(b)

| | | | Reference example | | | | |
|---|---|---|---|---|---|---|---|
| | | | 8 | 9 | 10 | 11 | 12 |
| Composition of mixed solution 1) (parts) | xylene | | - | 28.9 | - | 13 | - |
| | toluene | | 7.3 | - | 38.1 | - | 29.5 |
| | methyl ethyl ketone | | - | - | - | - | 29.5 |
| | methyl isobutyl ketone | | 7.3 | 28.9 | 25.4 | 13 | - |
| Content of a block copolymer in the resulting dispersion (%) | | | 34.5 | 34.3 | 34.6 | 34.1 | 35.0 |
| Viscosity at 25°C of the resulting dispersion containing a block copolymer (poise) | | | 3.1 | 2.9 | 2.8 | 2.1 | 2.5 |

1) Composition of mixed solution used in each Reference example in place of the mixed solution (II) used in Reference example 1, Step (B).

TABLE 5(a)

| | | Reference example | | | | |
|---|---|---|---|---|---|---|
| | | 8 | 9 | 10 | 11 | 12 |
| Solvent (parts) | xylene | - | 25 | - | 30 | - |
| | toluene | 40 | - | 30 | - | 30 |
| | methyl ethyl ketone | - | - | - | - | 30 |
| | methyl isobutyl ketone | 20 | 25 | 20 | 30 | - |
| Composition of mixed solution (parts) | xylene | - | 25 | - | 20 | - |
| | toluene | 30 | - | 30 | - | 20 |
| | methyl ethyl ketone | - | - | - | - | 20 |
| | methyl isobutyl ketone | 10 | 25 | 20 | 20 | - |
| | benzoyl peroxide | 4 | - | - | 4 | - |
| | t-butylperoxy 2-ethylhexanoate | - | - | 4 | - | - |
| | AIBN | - | 4 | - | - | 4 |
| | 2-hydroxyethyl methacrylate | 9.6 | 9.6 | 9.6 | 9.6 | 9.6 |
| | methyl methacrylate | - | 43.2 | - | 43.2 | - |
| | butyl acrylate | - | - | 69.12 | 43.2 | 38 |
| | 2-ethylhexyl acrylate | 48 | 43.2 | - | - | 38 |
| | styrene | 37.6 | - | 17.28 | - | - |
| | acrylic acid | 0.8 | - | - | - | 0.8 |

TABLE 5(b)

| | | Reference example | | | | |
|---|---|---|---|---|---|---|
| | | 8 | 9 | 10 | 11 | 12 |
| Dropping time of mixed solution (hour) | | 4 | 3 | 2 | 2 | 3 |
| Temperature in the reactor during the dropping (°C) | | 80 | 70 | 75 | 80 | 65 |
| Polymerization time after dropping (hour) | | 10 | 12 | 8 | 8 | 10 |
| Polymerization temperature after dropping (°C) | | 80 | 70 | 80 | 80 | 70 |
| Content of polymer in the reaction solution (wt.%) | | 49.2 | 49.5 | 49.9 | 50.0 | 49.8 |
| Number-average molecular weight of polymer | | 19,800 | 21,200 | 17,000 | 18,500 | 21,000 |
| $\bar{M}_w/\bar{M}_n$ of polymer | | 2.9 | 2.8 | 2.4 | 2.4 | 2.4 |

Reference examples 13—20

(A) Production of a fluorine-containing polymer:

A fluorine-containing polymer was produced according to the method described in Reference example 4 under a polymerization condition shown in the following Table 6 by the use of a mixed solution shown in Table 6 in place of the mixed solution (II) used in Reference example 4.

The content of the resulting fluorine-containing polymer in the reaction solution and the molecular weight of the polymer are shown in Table 6.

TABLE 6(a)

| | | Reference example | | | | | | | |
|---|---|---|---|---|---|---|---|---|---|
| | | 13 | 14 | 15 | 16 | 17 | 18 | 19 | 20 |
| Solvent (parts) | xylene | 30 | - | 30 | - | 25 | - | 30 | - |
| | toluene | - | 40 | - | 40 | - | 30 | - | 30 |
| | methyl ethyl ketone | 30 | - | 30 | - | - | - | - | 30 |
| | methyl isobutyl ketone | - | 20 | - | 20 | 25 | 30 | 30 | - |
| Composition of mixed solution (parts) | xylene | 20 | - | 20 | - | 25 | - | 20 | - |
| | toluene | - | 30 | - | 30 | - | 30 | - | 20 |
| | methyl ethyl ketone | 20 | - | 20 | - | - | - | - | 20 |
| | methyl isobutyl ketone | - | 10 | - | 10 | 25 | 20 | 20 | - |
| | benzoyl peroxide | 1 | 4 | 1 | 4 | - | - | 4 | - |
| | t-butylperoxy 2-ethylhexanoate | 3 | - | 3 | - | - | 4 | - | - |
| | AIBN | - | - | - | - | 4 | - | - | 4 |
| | 2-hydroxyethyl methacrylate | 9.6 | 9.6 | 9.6 | 9.6 | 9.6 | 9.6 | 9.6 | 9.6 |
| | methyl methacrylate | 19.2 | - | 25.6 | - | 38.4 | - | 38.4 | - |
| | butyl acrylate | 19.2 | - | 25.6 | - | - | 61.44 | 38.4 | 38 |
| | 2-ethylhexyl methacrylate | 19.2 | 38.4 | 25.6 | 44.4 | 38.4 | - | - | 38 |
| | styrene | - | 28 | - | 31.6 | - | 15.36 | - | - |
| | acrylic acid | - | 0.8 | - | 0.8 | - | - | - | 0.8 |

TABLE 6(b)

| | | Reference example | | | | | | | |
|---|---|---|---|---|---|---|---|---|---|
| | | 13 | 14 | 15 | 16 | 17 | 18 | 19 | 20 |
| Composition of mixed solution (parts) | O<br>‖<br>$CH_2=CH-COCH_2(CF_2CF_2)_3H$ | 28.8 | - | 9.6 | - | - | - | - | 4.8 |
| | O<br>‖<br>$CH_2=CH-COCH_2CH_2(CF_2)_6CF_3$ | - | 19.2 | - | 9.6 | - | - | - | - |
| | $CH_3$ O<br>\| ‖<br>$CH_2=C—COCH_2CF_3$ | - | - | - | - | 9.6 | - | - | 4.8 |
| | $CH_3$ O<br>\| ‖<br>$CH_2=C—CO(CH_2)_5OCF(CF_3)_2$ | - | - | - | - | - | 9.6 | - | - |
| | O $C_2H_5$<br>‖ \|<br>$CH_2=CH-COCH_2NCOC_7F_{15}$ | - | - | - | - | - | - | 9.6 | - |

TABLE 6(c)

| | Reference example | | | | | | | |
|---|---|---|---|---|---|---|---|---|
| | 13 | 14 | 15 | 16 | 17 | 18 | 19 | 20 |
| Dropping time of mixed solution (hour) | 2 | 3 | 2 | 3 | 3 | 2 | 2 | 3 |
| Temperature in the reactor during the dropping (°C) | 75 | 80 | 75 | 80 | 70 | 75 | 80 | 65 |
| Polymerization time after dropping (hour) | 10 | 8 | 10 | 8 | 12 | 8 | 8 | 10 |
| Polymerization temperature after dropping (°C) | 75 | 80 | 75 | 80 | 70 | 80 | 80 | 70 |
| Content of polymer in the reaction solution (wt.%) | 49.8 | 49.5 | 49.9 | 49.8 | 50.0 | 49.8 | 49.9 | 49.5 |
| Number-average molecular weight of polymer | 18,500 | 19,000 | 18,100 | 18,800 | 19,600 | 17,200 | 17,300 | 21,000 |
| $\bar{M}_w/\bar{M}_n$ of polymer | 2.4 | 2.6 | 2.3 | 2.5 | 2.6 | 2.5 | 2.4 | 2.3 |

Examples 4—8

The block copolymer synthesized in the above Reference examples 8—12, Step (B) was mixed with the matrix polymer synthesized in the above Reference examples 8—12, Step (C), which matrix polymer was an acrylic resin, in a mixing ratio shown in the following Table 7 to modify the acrylic resin, and the modified acrylic resin was cured in the presence of a curing agent, and the surface physical properties of the cured modified acrylic resin were measured in the same manner as described in Examples 1—3.

In the test for the surface physical properties, a methyl ethyl ketone solution containing 15% by weight of the modified acrylic resin was produced, applied to a wash primer-treated iron sheet such that a cured modified acrylic resin film having a thickness of 50 μm would be formed after drying, and the surface physical properties of the cured resin film were measured. As the curing agent, hexamethylene diisocyanate trimer was used in an equivalent ratio of OH/NCO of 1, and the modified acrylic resin was cured and backed to the iron sheet surface at 80°C for 90 minutes in the presence of the curing agent and then dried in air for 2 days.

The obtained results are shown in Table 7.

Comparative examples 5—10

A cured resin film was formed on an iron sheet surface in the same manner as described in Examples 4—8, except that a mixture of a fluorine-containing polymer synthesized in the above Reference examples 13—20, Step (A) with a matrix polymer synthesized in the above Reference examples 8—12, Step (C) in a mixing ratio shown in the following Table 8, or the fluorine-containing polymer alone, or the matrix polymer alone was used. The surface physical properties of the above treated iron sheet were measured under the same condition as described in Examples 4—8. The obtained results are shown in Table 8.

TABLE 7(a)

| | Kinds of block copolymer and matrix polymer used | Resin composition (weight ratio) block copolymer/matrix polymer | Amount of perfluoro-acrylate contained in resin (wt.%) | Contact angle 1) (degree) | | Chemical resistance 2) | | Stain resist-ance 3) | Weather resist-ance 4) (%) |
|---|---|---|---|---|---|---|---|---|---|
| | | | | water | dodecane | acid (degree) | alkali (degree) | | |
| | | | | | | | | | |
| Example 4 | Reference Example 8 | 10/90 | 2 | 115 | 72 | ◎ 110 | ◎ 108 | ◎ | 93 |
| | | 3/97 | 0.6 | 114 | 72 | ◎ 108 | ◎ 108 | ◎ | 87 |
| | | 1/99 | 0.2 | 114 | 71 | ◎ 108 | ◎ 107 | ◎ | 85 |
| | | 0.1/99.9 | 0.02 | 109 | 65 | ◎ 103 | ◎ 101 | ◎ | 74 |
| Example 5 | Reference Example 9 | 3/97 | 1.5 | 108 | 53 | ◎ 105 | ◎ 104 | ◎ | 93 |
| | | 1/99 | 0.5 | 100 | 52 | ◎ 99 | ◎ 98 | ◎ | 90 |
| | | 0.5/99.5 | 0.25 | 98 | 48 | ◎ 95 | ◎ 94 | ◎ | 78 |

TABLE 7(b)

| | Kinds of block copolymer and matrix polymer used | Resin composition (weight ratio) block copolymer / matrix polymer | Amount of perfluoro-acrylate contained in resin (wt.%) | Contact angle 1) (degree) | | Chemical resistance 2) | | Stain resist-ance 3) | Weather resist-ance 4) (%) |
|---|---|---|---|---|---|---|---|---|---|
| | | | | water | dodecane | acid (degree) | alkali (degree) | | |
| Example 6 | Reference Example 10 | 3/97 | 1.2 | 112 | 68 | ◎ 105 | ◎ 103 | ◎ | 93 |
| | | 1/99 | 0.4 | 111 | 67 | ◎ 105 | ◎ 103 | ◎ | 89 |
| | | 0.5/99.5 | 0.2 | 111 | 64 | ◎ 105 | ◎ 102 | ◎ | 80 |
| | | 0.1/99.9 | 0.04 | 109 | 50 | ◎ 100 | ◎ 99 | ◎ | 78 |
| Example 7 | Reference Example 11 | 3/97 | 0.9 | 111 | 65 | ◎ 107 | ◎ 107 | ◎ | 90 |
| | | 1/99 | 0.3 | 110 | 63 | ◎ 105 | ◎ 103 | ◎ | 83 |
| Example 8 | Reference Example 12 | 3/97 | 1.5 | 111 | 52 | ◎ 107 | ◎ 106 | ◎ | 88 |
| | | 1/99 | 0.5 | 110 | 52 | ◎ 104 | ◎ 102 | ◎ | 72 |

Note:

1) Measuring method is the same as that described in Table 2.

2) Acid resistance:

An iron sheet coated with a sample resin film was immersed in a 10% aqueous solution of sulfuric acid at 25°C for 350 hours and then washed with water for 20 minutes, and the film surface was wiped by means of a Kimwipe, and left to stand for 1 hour at 25°C under a relative humidity of 50%. The appearance of the thus treated resin film was estimated and the oil repellency of the iron sheet was measured.

The marks of ◎, ○, □ and × represent the appearance of the resin film, and the numerical value is the contact angle of the iron sheet with water.

Alkali resistance:

An iron sheet coated with a sample resin film was immersed in a 5% aqueous solution of sodium hydroxide at 25°C for 80 hours, and the immersed iron sheet was treated in the same manner as that in the acid resistance. The appearance of the thus treated resin film was estimated, and the oil repellency of the iron sheet was measured in the same manner as described in the acid resistance.

Estimation standard of appearance of film:

◎: There is no change in the appearance of the resin film surface before and after treatment.

○: Corroded portions are observed on the resin film surface by means of a scanning type electron microscope (magnification: 200 times).

△: Corroded portions are observed on the resin film surface by a naked eye.

×: Not less than 1% of the immersed surface area has been corroded.

3) A mark was put on the resin film surface by a black marking ink, and after left to stand for 240 hours, the mark was wiped off by means of xylene, and the stain resistance of the resin film was estimated.

Estimated standard:

◎: No traces.

○: Traces remain somewhat, but do not spoil the appearance of the resin film surface.

△: Traces remain and spoil the appearance of the resin film surface.

×: Traces remain completely.

4) Gloss-retention after irradiated with sunshine by a weatherometer for 1,500 hours.

TABLE 8(a)

| | Kind of block copolymer | Kind of matrix polymer | Resin composition (weight ratio) fluorine-containing polymer / matrix polymer | Amount of perfluoro-acrylate contained in resin (wt.%) | Contact angle (degree) | | Chemical resistance | | Stain resistance | Weather resistance (%) |
|---|---|---|---|---|---|---|---|---|---|---|
| | | | | | water | dodecane | acid (degree) | alkali (degree) | | |
| Comparative Example 5 | Reference Example 14 | Reference Example 8 | 10/90 | 2 | 105 | 52 | ◎ 100 | ◎ 99 | ◎ | 89 |
| | | | 3/97 | 0.6 | 105 | 52 | ◎ 100 | ◎ 99 | ◎ | 82 |
| | | | 1/99 | 0.2 | 100 | 46 | ◎ 97 | ◎ 95 | ◎ | 80 |
| | | | 0/100 | 0 | 91 | measurement is impossible | Δ 88 | ○ 85 | × | 72 |

TABLE 8(b)

| | Kind of block copolymer | Kind of matrix polymer | Resin composition (weight ratio) fluorine-containing polymer/matrix polymer | Amount of perfluoro-acrylate contained in resin (wt.%) | Contact angle (degree) | | Chemical resistance | | Stain resist-ance | Weather resist-ance (%) |
|---|---|---|---|---|---|---|---|---|---|---|
| | | | | | water | dodecane | acid (degree) | alkali (degree) | | |
| Comparative Example 6 | Reference Example 16 | Reference Example 8 | 100/0 | 10 | 96 | 45 | ◎ 93 | ◎ 90 | ◎ | 87 |
| Comparative Example 7 | Reference Example 17 | Reference Example 9 | 100/0 | 10 | 93 | 40 | ◎ 90 | ◎ 88 | ◎ | 90 |
| Comparative Example 8 | Reference Example 18 | Reference Example 10 | 100/0 | 10 | 95 | 42 | ◎ 90 | ◎ 88 | ◎ | 85 |
| Comparative Example 9 | Reference Example 19 | Reference Example 11 | 100/0 | 10 | 92 | 40 | ◎ 86 | ◎ 84 | ◎ | 89 |
| Comparative Example 10 | Reference Example 20 | Reference Example 12 | 100/0 | 10 | 88 | 34 | ◎ 82 | ◎ 80 | ◎ | 90 |

Note : Measuring methods are the same as those in Table 10.

It can be seen from tables 7 and 8 that the block copolymer of the present invention can give water repellency, oil repellency, chemical resistance, stain resistance and weather resistance to an acrylic resin, and the cured film of the acrylic resin is superior in these properties than the cured film of an acrylic resin (Comparative examples) which does not contain the block copolymer or contains a fluorine-containing polymer other than the block copolymer.

**Claims**

1. A method for modifying the surface of a polymer material comprising:

(a) producing a block copolymer consisting of a fluorine-containing polymer portion and a polymer portion compatible with the polymer material in a weight ratio of the fluorine-free polymer portion to the fluorine-containing polymer portion of 1/19—19/1, by the following first and second steps:

in the first step, polymerizing either a fluorine-containing vinyl monomer which forms a fluorine-containing polymer portion, or a fluorine-free vinyl monomer which forms a polymer portion compatible with the polymer material, at a temperature of 60—130°C for 2 to 10 hours in the presence of a polymeric peroxide as a polymerization initiator, the amount of which polymeric peroxide is 0.5—20 parts by weight based on 100 parts by weight of the vinyl monomers used in the first step, to produce a peroxy bond-containing polymer, and

in the second step, polymerizing either a fluorine-free vinyl monomer or a fluorine-containing vinyl monomer, said vinyl monomer being selected in such a manner that, when a fluorine-containing vinyl monomer is used in the first step, a fluorine-free vinyl monomer is used in the second step, and when a fluorine-free vinyl monomer is used in the first step, a fluorine-containing vinyl monomer is used in the second step, at a temperature of 60—140°C in the presence of the peroxy bond-containing polymer obtained in the first step and used as sole polymerization initiator: and

(b) mixing said block copolymer with a polymer material to be modified in an amount of 0.01—30 parts by weight based on 100 parts by weight of the polymer material:

said fluorine-containing vinyl monomer comprises a compound represented by the following general formula:

$$CH_2 = CR_{11}\,COOR_{12}\,R_f$$

wherein

$R_{11}$ represents a hydrogen atom or a methyl group;

$R_{12}$ represnts $—C_pH_{2p}—$, $—C(C_pH_{2p+1})H—$ or $—CH_2C(C_pH_{2p+1})H—$;

$R_f$ represents $—C_nF2_{n+1}$, $—(CF_2)_nH$,

$$\underset{}{—\overset{\displaystyle C_pH_{2p+1}\atop |}{N}COC_nF_{2n+1}} \quad \text{or} \quad —\overset{\displaystyle C_pH_{2p+1}\atop |}{N}—SO_2—C_nF_{2n+1}$$

wherein p is a positive integer of 1—10, n is a positive integer of 1—16.

said fluorine-free vinyl monomer comprises at least one member selected from the group consisting of (methy)acrylic acid ester; fatty acid vinyl ester; aromatic vinyl monomer; amide group-, hydroxyl group- or carboxylic acid group-containing vinyl monomer; butadiene; vinyl chloride; vinylidene chloride; (meth) acrylonitrile; dibutyl fumarate; maleic anhydride; (meth)allyl glycidyl ether; alkali metal salt, ammonium salt or organic amine salt of radical-polymerizable unsaturated carboxylic acid; sulfonic acid group-containing radical-polymerizable unsaturated monomer or its alkali metal salt, ammonium salt or organic amine salt; quarternary ammonium salt derived from (meth)acrylic acid; and (meth)acrylic acid ester of alcohol having tertiary amino group or its quarternary ammonium salt wherein (meth)allyl denotes allyl or methallyl and (meth)acryl denotes acryl or methacryl.

2. A method according to claim 1, wherein said polymeric peroxide is at least one member selected from the group consisting of

a polymeric peroxide having the following general formula (I)

$$\left[ \overset{O}{\overset{\|}{C}}R_1\overset{O}{\overset{\|}{C}}OR_2O\overset{O}{\overset{\|}{C}}R_1\overset{O}{\overset{\|}{C}}OO \right]_n \qquad (I)$$

wherein $R_1$ represents an alkylene or substituted alkylene group having 1—18 carbon atoms, a cycloalkylene or substituted cycloalkylene group having 3—15 carbon atoms, a phenylene group or a

substituted phenylene group having 7—18 carbon atoms; $R_2$ represents an alkylene or substituted alkylene group having 2—10 carbon atoms,

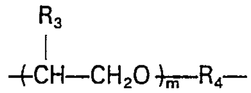

(wherein $R_3$ represents a hydrogen atom or a methyl group, $R_4$ represents an alkylene or substituted alkylene group having 2—10 carbon atoms, and m is a positive integer of 1—13),

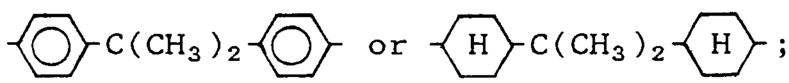

and n is a positive integer of 2—30,

a polymeric peroxide having the following general formula (II)

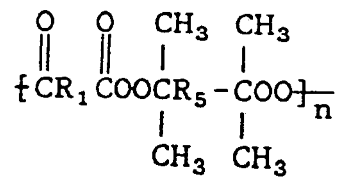

(II)

wherein $R_1$ and n have the same meanings as in the general formula (I); and $R_5$ represents an ethylene group, a phenylene group or an acetylene group,

a polymeric peroxide having the following general formula (III)

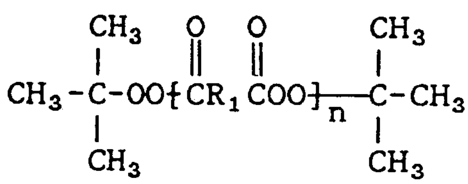

(III)

wherein $R_1$ and n have the same meanings as in the general formula (I),

a polymeric peroxide having the following general formula (IV)

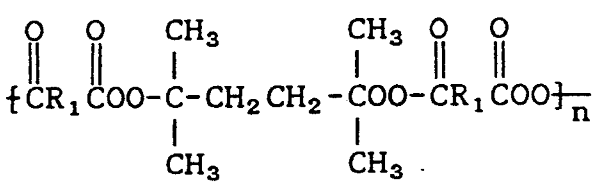

(IV)

wherein $R_1$ and n have the same meanings as in the general formula (I),

a polymeric peroxide having the following general formula (V)

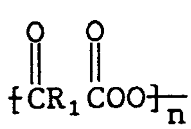

(V)

wherein $R_1$ and n have the same meanings as in the general formula (I),

a polymeric peroxide having the following general formula (VI)

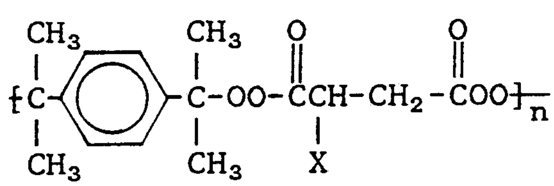

(VI)

wherein X represents a hydrogen atom, a methyl group or a chlorine atom, and n is a positive integer of 2—30, and

a polymeric peroxide having the following general formula (VII)

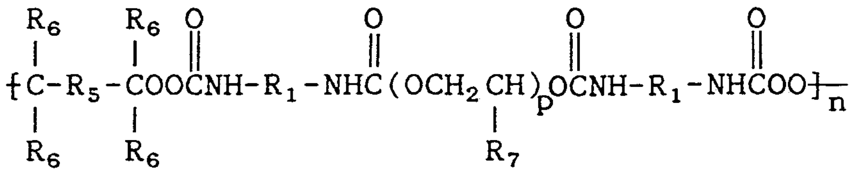

(VII)

wherein $R_1$ and n have the same meanings as in the general formula (I); $R_5$ has the same meaning as in the general formula (II); $R_6$ and $R_7$ represent a hydrogen atom or a methyl group; and p is a positive integer of 1—100.

3. A method according to claim 1, wherein the polymer material is modified by dissolving said polymer material in a solvent together with the block copolymer.

4. A method according to claim 3, wherein the polymer material is coating resin.

5. A method according to claim 4, wherein the coating resin is acrylic resin.

6. A method according to claim 1, wherein said polymer material is a resin.

**Patentansprüche**

1. Verfahren zur Modifizierung der Oberfläche eines Polymermaterials, umfassend:

a) Herstellen eines Blockcopolymer, bestehend aus einem fluorhaltigen, Polymer-Anteil und einem Polymer-Anteil, welcher mit dem Polymermaterial verträglich ist, mit einem Gewichtsverhältnis des fluorfreien Polymer-Anteils zu dem fluorhaltigen Polymer-Anteil von 1/19—19/1 durch den folgenden ersten und zweiten Schritt: in dem ersten Schritt Polymerisieren entweder eines fluorhaltigen Vinylmonomer, das den fluorhaltigen Polymer-Anteil bildet, oder eines fluorfreien Vinylmonomer, welches einen Polymer-Anteil bildet, der mit dem Polymermaterial verträglich ist, 2 bis 10 Stunden bei einer Temperatur von 60 bis 130°C in Gegenwart eines Polymer-Peroxids als Polymerisationsinitiator, wobei die Menge des Polymer-Peroxids 0,5 bis 20 Gewichtsteile, bezogen auf 100 Gewichtsteile des in dem ersten Schritt verwendeten Vinylmonomer, beträgt, um ein gebundenes Peroxid enthaltendes Polymer zu bilden, und

in dem zweiten Schritt Polymerisieren entweder eines fluorfreien Vinylmonomer oder eines fluorhaltigen Vinylmonomer, wobei das besagte Vinylmonomer in einer solchen Weise ausgewählt wird, daß, wenn ein fluorhaltiges Vinylmonomer in dem ersten Schritt verwendet wird, ein fluorfreies Vinylmonomer in dem zweiten Schritt verwendet wird, und, wenn ein fluorfreies Vinylmonomer in dem ersten Schritt verwendet wird, ein fluorhaltiges Vinylmonomer in dem zweiten Schritt verwendet wird, bei einer Temperatur von 60 bis 140°C in Gegenwart des gebundenes Peroxid enthaltenden Polymer, das im ersten Schritt erhalten wird und als einziger Polymerisationsinitiator eingesetzt wird; und

b) Mischen des besagten Blockcopolymer mit einem zu modifizierenden Polymermaterial in einer Menge von 0,01 bis 30 Gewichtsteilee, bezogen auf 100 Gewichtsteile des Polymermaterials;

wobei das fluorhaltige Vinylmonomer eine Verbindung umfaßt, welche durch die folgende allgemeine Formel wiedergegeben wird:

$$CH_2 = CR_{11}\ COOR_{12}R_f$$

worin

$R_{11}$ ein Wasserstoffatom oder eine Methylgruppe darstellt;

$R_{12}$ $-C_pH_{2p}-$, $-C(C_pH_{2p+1})H-$ oder $-CH_2C(C_pH_{2p+1})H-$ darstellt;

$R_f$ $-C_nF2_{n+1}$, $-(CF_2)_nH$,

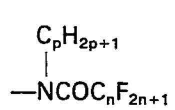

oder

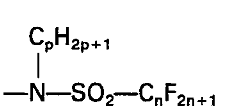

darstellt;

worin, p eine positive ganze Zahl von 1 bis 10, n eine positive ganze Zahl von 1 bis 16 ist;

wobei das besagte fluorfreie Vinylmonomer wenigstens eine Verbindung umfaßt, die aus einer Gruppe ausgewählt wird, die besteht aus (Methyl)acrylsäureester; Fettsäurevinylester; aromatisches Vinylmonomer; Amidgruppe-, Hydroxylgruppe- oder Carboxylsäuregruppe-haltiges Vinylmonomer; Butadien; Vinylchlorid; Vinylidenchlorid; (Meth)acrylnitril; Dibutylfumarat; Maleinsäureanhydrid; (Meth)allylglycidyläther; Alkalimetallsalz, Ammoniumsalz oder organisches Aminsalz einer radikalisch polymerisierbaren ungesättikgen Carboxylsäure; Sulfonsäuregruppen-haltiges radikalisch

polymerisierbares ungesättigtes Monomer oder dessen Alkalimetallsalz, Ammoniumsalz oder organisches Aminsalz; quaternäres Ammoniumsalz, abgeleitet von (Meth)acrylsäure; und (Meth)acrylsäureester eines Alkohols, der eine tertiäre Aminogruppe aufweist, oder dessen quaternäres Ammoniumsalz, worin (Meth)allyl Allyl oder Methallyl bezeichnet und (Meth)acryl Acryl oder Methacryl bezeichnet.

2. Verfahren nach Anspruch 1, wobei das besagte Polymer-Peroxid wenigstens eine Verbindung ist, die aus einer Gruppe ausgewählt wird, die besteht aus einem Polymer-Peroxid mit folgender allgemeinen Formel (I)

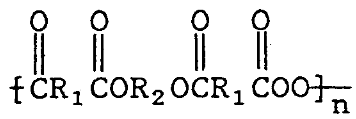 (I)

worin $R_1$ eine Alkylen- oder substituierte Alkylengruppe mit 1 bis 18 Kohlenstoffatomen, eine Cycloalkylen- oder substituierte Cycloalkylengruppe mit 3 bis 15 Kohlenstoffatomen, eine Phenylengruppe oder eine substituierte Phenylengruppe mit 7 bis 18 Kohlenstoffatomen darstellt; $R_2$ eine Alkylen- oder substituierte Alkylengruppe mit 2 bis 10 Kohlenstoffatomen,

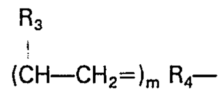

(worin $R_3$ ein Wasserstoffatom oder eine Methylgruppe darstellt, $R_4$ eine Alkylen- oder substituierte Alkylengruppe mit 2 bis 10 Kohlenstoffatomen darstellt und m eine positive ganze Zahl von 1 bis 13 ist),

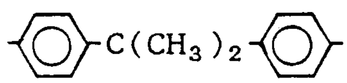 oder 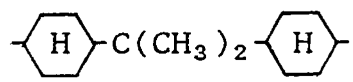 ;

darstellt;

und n eine positive Zahl von 2 bis 30 ist,

einem Polymer-Peroxid mit der folgenden allgemeinen Formel (II)

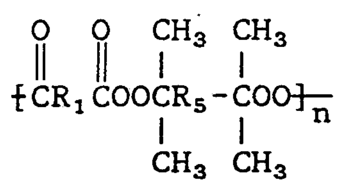 (II)

worin $R_1$ und n die gleiche Bedeutung wie in der allgemeinen Formel (I) haben; und $R_5$ eine Ethylengruppe, eine Phenylengruppe oder eine Acetylengruppe darstellt,

einem Polymer-Peroxid mit der folgenden allgemeinen Formel (III)

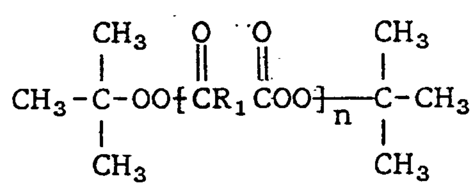 (III)

worin $R_1$ und n die gleiche Bedeutung wie in der allgemeinen Bedeutung (I) haben,

einem Polymer-Peroxid mit der folgenden allgemeinen Formel (IV):

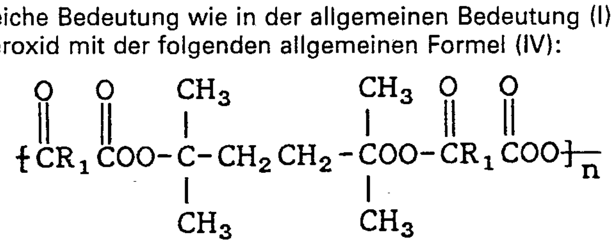 (IV)

worin $R_1$ und n dieselbe Bedeutung wie in der allgemeinen Formel (I) haben,

einem Polymer-Peroxid mit der folgenden allgemeinen Formel (V):

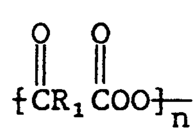 (V)

worin R und n dieselbe Bedeutung wie in der allgemeinen Formel (I) haben,

einem Polymer-Peroxid mit der allgemeinen Formel (VI):

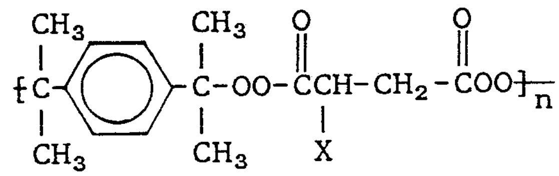 (VI)

worin X ein Wasserstoffatom, eine Methylgruppe oder ein Chloratom darstellt und n eine positive ganze Zahl von 2 bis 30 ist, und

einem Polymer-Peroxid mit der folgenden allgemeinen Formel (VII):

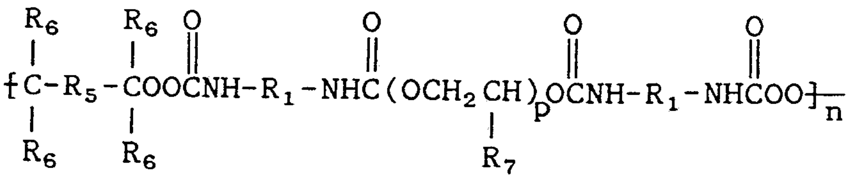 (VII)

worin $R_1$ und n dieselbe Bedeutung wie in der allgemeinen Formel (I) haben; $R_5$ dieselbe Bedeutung wie in der allgemeinen Formel (II) hat; $R_6$ und $R_7$ ein Wasserstoffatom oder eine Methylgruppe darstellen und p eine positive ganze Zahl von 1 bis 100 ist.

3. Verfahren nach Anspruch 1, wobei das Polymermaterial durch Lösen des besagten Polymermaterials in einem Lösungsmittel zusammen mit dem Blockcopolymeren modifiziert wird.

4. Verfahren nach Anspruch 3, wobei das Polymermaterial ein Überzugsharz ist.

5. Verfahren nach Anspruch 4, wobei das Überzugsharz ein Acrylharz ist.

6. Verfahren nach Anspruch 1, worin das besagte Polymermaterial ein Harz ist.

**Revendications**

1. Procédé pour modifier la surface d'un produit polymère, consistant à:

a) produire un copolymère bloc contenant une portion polymère contenant du fluor et une portion polymère compatible avec le produit polymère en un rapport en poids de la portion polymère dépourvue de fluor à la portion polymère contenant du fluor compris entre 1/19 et 19/1, par le premier stade et le deuxième stade suivants:

dans le premier stade, polymériser, soit un monomère vinylique contenant du fluor qui forme la portion polymère contenant du fluor, soit un monomère vinylique dépourvu de fluor qui forme une portion polymère compatible avec le produit polymère, à une température de 60 à 130°C pendant 2 à 10 heures, en la présence d'un peroxyde polymère comme initiateur de polymérisation, la quantité de peroxyde polymère étant de 0,5 à 20 parties en poids, sur la base de 100 parties en poids des monomères vinyliques utilisés dans la première étape, pour produire un polymère contenant des liaisons peroxy, et

dans le deuxième stade, polymériser, soit un monomère vinylique dépourvu de fluor, soit un monomère vinylique contenant du fluor, ce monomère vinylique étant choisi de telle manière que, lorsqu'on a utilisé dans le premier stade un monomère vinylique contenant du fluor, on utilise dans le deuxième stade un monomère vinylique dépourvu de fluor, et que, lorsqu'on a utilisé dans le premier stade un monomère vinylique dépourvu de fluor, on utilise dans le deuxième stade un monomère vinylique contenant du fluor, à une température de 60 à 140°C en la présence du polymère contenant des liaisons peroxy obtenu dans le premier stade et utilisé comme seul initiateur de polymérisation; et

(b) mélanger ce copolymère bloc avec le produit polymère à modifier en une quantité de 0,01 à 30 parties en poids, sur la base de 100 parties en poids du produit polymère;

le monomère vinylique contenant du fluor comprenant un composé représenté par la formule générale:

$$CH_2 = CR_{11}\ COOR_{12}R_f$$

dans laquelle:

$R_{11}$ est un atome d'hydrogène ou un groupe méthyle,

$R_{12}$ est $—C_pH_{2p}—$, $—C(C_pH_{2p+1})H—$ or $—CH_2C(C_pH_{2p+1})H—$;

$R_f$ est $—C_nF2_{n+1}$, $—(CF_2)_nH$,

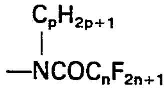 ou 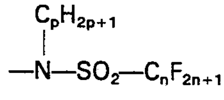

dans laquelle p est un entier positif de 1 à 10, et 1 est un entier positif de 1 à 16;

le monomère vinylique dépourvu de fluor contenant au moins un élément choisi dans le groupe comprenant les composés suivants: ester d'acide (méth) acrylique; ester vinylique d'acides gras; monomère vinylique aromatique; monomère vinylique contenant un groupe amide, un groupe hydroxyle ou un groupe acide carboxylique; butadiène; chlorure de vinyle; chlorure de vinylidène; (meth) acrylonitrile; fumarate de dibutyle; anhydride maléique; éther (méth) allyl glycidylique; sels de métal alcalin; sels d'ammonium ou sels d'amines organiques d'un acide carboxylique non saturé polymérisable par polymérisation radicalaire; monomère non saturé polymérisable par polymérisation radicalaire contenant des groupes acide sulfonique ou son sel de métal alcalin, son sel d'ammonium ou son sel d'amine organique; sel d'ammonium quaternaire dérivé de l'acide (méth) acrylique; et ester d'acide (méth) acrylique d'un alcool ayant un groupe amino tertiaire ou son sel d'ammonium quaternaire, dans lequel (meth) allyle désigne un groupe allyle ou méthallyle et (méth) acryle désigne un groupe acryle ou méthacryle.

2. Procédé selon la revendication 1, dans lequel le peroxyde polymère est au moins un élément choisi dans le groupe comprenant:

un peroxyde polymère ayant la formule générale suivante (I):

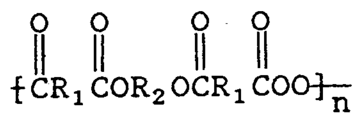 (I)

dans laquelle $R_1$ représente un groupe alcoylène ou un groupe alcoyléne substitué ayant 1 à 18 atomes de carbone, un groupe cycloalcoylène ou un groupe cycloalcoylène substitué ayant 3 à 15 atomes de carbone, un groupe phénylène ou un groupe phénylène substitué ayant 7 à 18 atomes de carbone; $R_2$ représente un groupe alcoylène ou un groupe alcoylène substitué ayant 2 à 10 atomes de carbone,

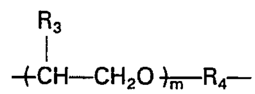

(dans laquelle $R_3$ est un atome d'hydrogène ou un groupe méthyle, $R_4$ est un groupe alcoylène ou un groupe alcoylène substitué ayant 2 à 10 atomes de carbone, et m est un entier positif de 1 à 13),

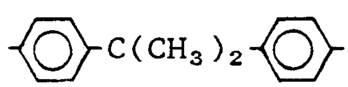 ou 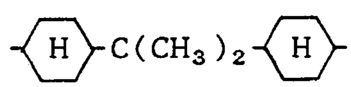 ;

et n est un entier positif de 2 à 30,

un peroxyde polymère ayant la formule générale suivante (II):

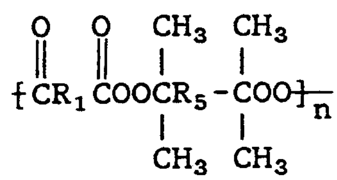 (II)

dans laquelle $R_1$ et n ont les mêmes significations que dans la formule générale (I); et $R_5$ représente un groupe éthylène, un groupe phénylène ou un groupe acétylène,

un peroxyde polymère ayant la formule générale suivante (III):

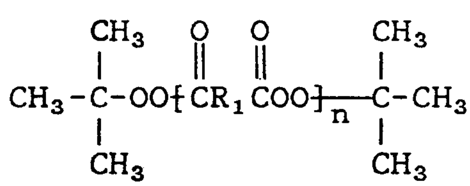 (III)

dans laquelle $R_1$ et n ont les mêmes significations que dans la formule générale (I),

un peroxyde polymère ayant la formule générale suivante (IV):

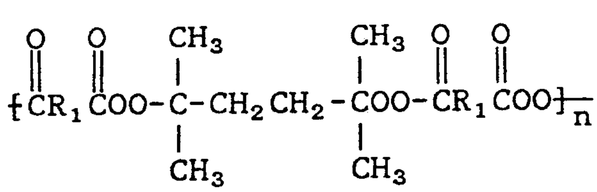 (IV)

dans laquelle $R_1$ et n ont les mêmes significations que dans la formule générale (I),

un peroxyde polymère ayant la formule générale (V):

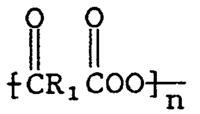

(V)

dans laquelle $R_1$ et n ont les mêmes significations que dans la formule générale (I)

un peroxyde polymère ayant la formule générale (VI):

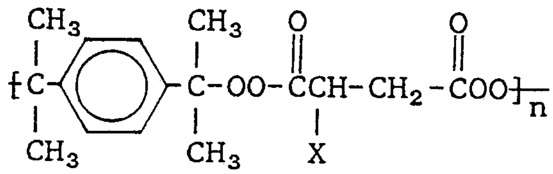

(VI)

dans laquelle X est un atome d'hydrogène, un groupe méthyle ou un atome de chlore, et n est un entier positif de 2 à 30, et

un peroxyde polymère ayant la formule générale suivante (VII):

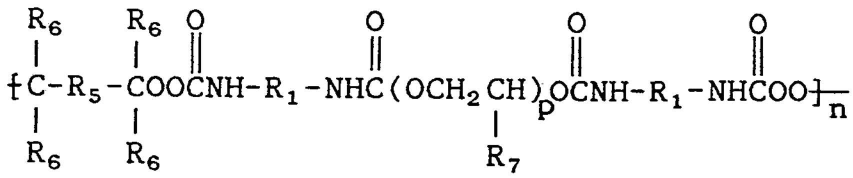

(VII)

dans laquelle $R_1$ et n ont les mêmes significations que dans la formule générale (I); $R_5$ a la même signification que dans la formule générale (II); $R_6$ et $R_7$ sont un atome d'hydrogène ou un groupe méthyle et p est un entier positif de 1 à 100.

3. Procédé selon la revendication 1, dans lequel le produit polymère est modifié en dissolvant ce produit polymère dans un solvant en même temps que le copolymère bloc.

4. Procédé selon la revendication 3, dans lequel le produit polymère est une résine de revêtement.

5. Procédé selon la revendication 4, dans lequel la résine de revêtement est un résine acrylique.

6. Procédé selon la revendication 1, dans lequel le produit polymère est une résine.